# EUROPÄISCHE PATENTSCHRIFT

(11) **EP 3 682 179 B1**
(45) Veröffentlichungstag und Bekanntmachung des Hinweises auf die Patenterteilung: **05.04.2023**
(21) Anmeldenummer: 17778190.3
(22) Anmeldetag: 13.09.2017
(51) Int. Cl.: F28D 9/00, B60H 1/32, F25B 25/00

(54) **KÄLTEERZEUGER UND KÄLTEANLAGE MIT EINEM KÄLTEERZEUGER**
COLD GENERATOR AND REFRIGERATING PLANT HAVING A COLD GENERATOR
GÉNÉRATEUR DE FROID ET INSTALLATION FRIGORIFIQUE POURVUE D'UN GÉNÉRATEUR DE FROID

(43) Veröffentlichungstag der Anmeldung: 22.07.2020
(73) Patentinhaber: BITZER Kühlmaschinenbau GmbH, 71065 Sindelfingen (DE)
(72) Erfinder: VETTER, Frank, 72149 Neustetten (DE)
(74) Vertreter: Hoeger, Stellrecht & Partner Patentanwälte mbB
(86) Internationale Anmeldenummer: PCT/EP2017/073020
(87) Internationale Veröffentlichungsnummer: WO 2019/052641

(56) Entgegenhaltungen:
- WO-A1-2008/061362
- WO-A1-2012/135864
- WO-A1-2015/140034
- US-A- 5 462 113
- US-A1- 2012 060 550

## Beschreibung

Die Erfindung betrifft einen Kälteerzeuger, umfassend einen Kältemittelkreislauf mit einem in dem Kältemittelkreislauf angeordneten Kältemittelverdichter, einem mit einem Hochdruckanschluss des Kältemittelverdichters verbundenen wärmeabgebenden Wärmetauscher, einem auf den wärmeabgebenden Wärmetauscher folgenden Expansionsorgan und einem auf das Expansionsorgan folgenden wärmeaufnehmenden Wärmetauscher, welcher wiederum ausgangsseitig mit einem Sauganschluss des Kältemittelverdichters verbunden ist.

Derartige Kälteerzeuger sind aus dem Stand der Technik bekannt.

Bei diesen Kälteerzeugern zirkuliert das Kältemittel in dem Kältemittelkreislauf unter einem hohen Druck, so dass sämtliche Komponenten des Kältemittelkreislaufs aufwändigen Herstellungs-, Prüfungs- und Wartungsverfahren unterzogen werden müssen und somit große räumliche Distanzen zwischen dem wärmeabgebenden Wärmetauscher und dem wärmeaufnehmenden Wärmetauscher nur mit hohem Kostenaufwand zu realisieren sind.

Die Dokumente US2012/0060550A und WO2015/140034A zeigen die Merkmale des Oberbegriffs des Anspruchs 1.

Die Erfindung wird durch die Merkmale des Anspruchs 1 definiert.

Der Vorteil der erfindungsgemäßen Lösung ist darin zu sehen, dass der eigentliche Kältemittelkreislauf lediglich das Zirkulieren von Kältemittel zwischen dem Kältemittelverdichter und der Wärmetauschereinheit erforderlich macht, während ein Transport der Wärme über die erforderlichen Strecken mittels eines ersten Wärmetransportkreislaufs zum Zuführen von Wärme zu der Wärmetauschereinheit und mittels eines zweiten Wärmetransportkreislaufs zum Abführen von Wärme aus der Wärmetauschereinheit erfolgt, die im Vergleich zu einem Kältemittelkreislauf mit einfachen technischen Mitteln realisierbar sind.

Insbesondere ermöglicht ein derartiger Kälteerzeuger, kleine Volumina für das Kältemittel zu realisieren, so dass das durch das Kältemittelvolumen bedingte Gefährdungspotential signifikant reduziert werden kann, da das durch die Wärmetransportkreisläufe bedingte Gefährdungspotential vernachlässigbar ist. Eine besonders vorteilhafte Lösung sieht vor, dass in dem wärmeabgebenden Wärmetauscher der mindestens eine wärmeabgebende Kältemittelströmungspfad und der mindestens eine wärmeaufnehmende zweite Wärmetransportströmungspfad für das zweite Wärmetransportmedium in in Stapelrichtung aufeinanderfolgenden Strömungspfadlagen angeordnet sind und der Wärmeaustausch parallel zur Stapelrichtung erfolgt, so dass die durch den Wärmeaustausch bedingten Verluste minimal sind.

Eine weitere vorteilhafte Lösung sieht vor, dass in dem wärmeaufnehmenden Wärmetauscher der mindestens eine wärmeaufnehmende Kältemittelströmungspfad und der mindestens eine wärmeabgebende Wärmetransportströmungspfad für das erste Wärmetransportmedium in in Stapelrichtung aufeinanderfolgenden Strömungspfadlagen angeordnet sind und der Wärmeaustausch parallel zur Stapelrichtung erfolgt.

Durch eine derartige Ausbildung der Wärmetauschereinheit sind die Verluste beim Wärmeaustausch zwischen den Wärmetransportmedien und dem Kältemittel minimal.

Prinzipiell ließe sich der Strömungspfadlagenstapel so ausführen, dass in jeder Strömungspfadlage ein Strömungspfad vorgesehen ist.

Erfindungsgemäß sind der wärmeabgebende Kältemittelströmungspfad und der wärmeabgebende erste Wärmetransportströmungspfad in einer Strömungspfadlage des Strömungspfadlagenstapels angeordnet.

Ferner sind der wärmeaufnehmende Kältemittelströmungspfad und der wärmeaufnehmende zweite Wärmetransportströmungspfad in einer Strömungspfadlage des Strömungspfadlagenstapels angeordnet.

Somit lässt sich die Wärmetauschereinheit aus einem Strömungspfadlagenstapel mit nur zwei verschiedenen Strömungspfadlagenstapeln, die vorzugsweise abwechselnd aufeinander gestapelt sind, realisieren.

Hinsichtlich der Anordnung des wärmeabgebenden Wärmetauschers und des wärmeaufnehmenden Wärmetauschers wurden im Zusammenhang mit der bisherigen Erläuterung der einzelnen Ausführungsformen keine näheren Angaben gemacht.

So sieht eine vorteilhafte Lösung vor, dass der wärmeabgebende Wärmetauscher und der wärmeaufnehmende Wärmetauscher in der Wärmetauschereinheit in Richtung quer zur Stapelrichtung nebeneinanderliegend angeordnet sind.

Insbesondere ist es in diesem Zusammenhang vorteilhaft, wenn der wärmeabgebende Wärmetauscher und der wärmeaufnehmende Wärmetauscher in Richtung quer zur Stapelrichtung im Abstand voneinander angeordnet sind, so dass ein Zwischenraum zwischen diesen verbleibt.

Ein derartiger Abstand der in Richtung quer zur Stapelrichtung nebeneinander liegenden Wärmetauscher lässt sich besonders günstig dazu ausnutzen, dass zwischen dem wärmeabgebenden Wärmetauscher und dem wärmeaufnehmenden Wärmetauscher ein innerer Wärmetauscher angeordnet ist.

Ein derartiger innerer Wärmetauscher lässt sich zweckmäßigerweise dadurch realisieren, dass dieser durch Überlappung des wärmeabgebenden Kältemittelströmungspfades in einer Strömungspfadlage und des wärmeaufnehmenden Kältemittelströmungspfades in der benachbarten Strömungspfadlage gebildet ist.

Durch einen derartigen inneren Wärmetauscher lässt sich die Effizienz der Wärmetauschereinheit noch zusätzlich steigern.

Insbesondere ist in diesem Zusammenhang vorgesehen, dass ein Abkühlen des Kältemittels im Bereich einer Kältemittelaustrittsseite des wärmeabgebenden Kältemittelströmungspfades und ein Aufwärmen des Kältemittels im Bereich einer Kältemittelaustrittsseite des wärmeaufnehmenden Kältemittelströmungspfades erfolgt, so dass dadurch eine Unterkühlung des Kältemittels vor seiner Expansion im Expansionsorgan möglich ist.

Eine konstruktiv besonders vorteilhafte Lösung sieht vor, dass der wärmeabgebende Kältemittelströmungspfad eine Kältemitteleintrittsseite und eine Kältemittelaustrittsseite und der wärmeaufnehmende Kältemittelströmungspfad eine Kältemitteleintrittsseite und eine Kältemittelaustrittsseite aufweisen und dass die Kältemittelaustrittsseite des wärmeabgebenden Kältemittelströmungspfades und die Kältemittelaustrittsseite des wärmeaufnehmenden Kältemittelströmungspfades miteinander überlappend angeordnet sind.

Darüber hinaus ist es bei der erfindungsgemäßen Lösung von Vorteil, wenn die Möglichkeit besteht, zeitweise dem ersten Wärmetransportkreislauf Wärme zuzuführen, beispielsweise um gegebenenfalls ein Abtauen eines im ersten Wärmetransportkreislauf angeordneten Wärmeübertragers vornehmen zu können.

Aus diesem Grund ist vorzugsweise vorgesehen, dass zum temporären Erwärmen des ersten Wärmetransportmediums in dem ersten Wärmetransportkreislauf in der Wärmetauschereinheit dem ersten Wärmetransportmedium Wärme zuführbar ist, wobei die Strömungspfade für das erste Wärmetransportmedium und das zweite Wärmetransportmedium getrennt und insbesondere eindeutig bleiben, das heißt keinerlei Austausch zwischen den Wärmetransportmedien oder Kontakt der Wärmetransportmedien miteinander erfolgt, sondern das erste Wärmetransportmedium und das zweite Wärmetransportmedium dauerhaft in getrennten Strömungspfaden geführt werden.

Beispielsweise lässt sich bei einer vorteilhaften Lösung ein Erwärmen des ersten Wärmetransportmediums dadurch realisieren, dass der Kälteerzeuger ein Umleitungssystem für Wärmetransportmedium aufweist, mit welchem in der Wärmetauschereinheit durch Umleiten von Wärmetransportmedium dem ersten Wärmetransportmedium Wärme zuführbar ist.

Ein derartiges Aufwärmen des ersten Wärmetransportmediums lässt sich besonders einfach dann realisieren, wenn die Wärmetauschereinheit einen Aufwärmwärmetauscher zum temporären Aufwärmen des ersten Wärmetransportmediums umfasst.

Eine konstruktive Realisierungsmöglichkeit sieht in diesem Zusammenhang vor, dass zur Bildung des Aufwärmwärmetauschers mindestens eine Strömungspfadlage der Wärmetauschereinheit mindestens einen zusätzlichen Strömungspfad zum temporären Aufwärmen des ersten Wärmetransportmediums aufweist.

Beispielsweise ist vorgesehen, dass der mindestens eine zusätzliche Strömungspfad in einer Strömungspfadlage vorgesehen ist, die in Stapelrichtung an einen der wärmeabgebenden ersten Wärmetransportströmungspfade für das erste Wärmetransportmedium angrenzt, mit diesem überlappend angeordnet ist und von dem zweiten Wärmetransportmedium durchströmbar ist.

Da das zweite Wärmetransportmedium auf Temperaturen erwärmt ist, die signifikant über den üblichen Betriebstemperaturen des ersten Wärmetransportmediums liegen, lässt sich somit in einfacher Weise durch diese Lösung das erste Wärmetransportmedium temporär aufwärmen.

Alternativ dazu sieht eine weitere vorteilhafte Ausführungsform vor, dass der mindestens eine zusätzliche Strömungspfad zum Aufwärmen des ersten Wärmetransportmediums von dem ersten Wärmetransportmedium durchströmbar ist, in Stapelrichtung an den mindestens einen wärmeaufnehmenden Wärmetransportströmungspfad für das zweite Wärmetransportmedium angrenzt und mit diesem überlappend angeordnet ist, so dass dadurch ebenfalls die Möglichkeit besteht, durch das zweite Wärmetransportmedium das erste Wärmetransportmedium temporär, beispielsweise zum Abtauen des in dem ersten Wärmetransportkreislauf vorgesehenen Wärmeübertragers aufzuwärmen.

Vorzugsweise ist zur Realisierung des mindestens einen zusätzlichen Strömungspfades mindestens eine zusätzliche Strömungspfadlage in dem Strömungspfadlagenstapel der Wärmetauschereinheit vorgesehen, in welcher der zusätzliche Strömungspfad angeordnet ist.

Ein derartiger zusätzlicher Strömungspfad könnte beispielsweise von jeder Art von warmem oder heißem Medium durchströmt werden um dadurch, dass dieser an einen der wärmeabgebenden Wärmetransportströmungspfade angrenzt, das erste Wärmetransportmedium zu Erwärmen.

Alternativ zum Vorsehen einer zusätzlichen Strömungspfadlage sieht eine andere vorteilhafte Ausführungsform vor, dass der mindestens eine zusätzliche Strömungspfad jeweils in derselben Strömungspfadlage angeordnet ist, wie einer der Wärmetransportströmungspfade.

Eine besonders günstige Lösung sieht vor, dass der mindestens eine vom ersten Wärmetransportmedium durchströmte erste Wärmetransportströmungspfad sich von einer Einlassseite zu einer Auslassseite erstreckt und das von dem ersten Wärmetransportströmungspfad der zusätzliche Wärmetransportströmungspfad abzweigt und zu einer Aufwärmaustrittsseite desselben verläuft.

Das heißt, dass der zusätzliche Strömungspfad eine Abzweigung zum ersten Wärmetransportströmungspfad darstellt und somit das erste Wärmetransportmedium dem ersten Wärmetransportströmungspfad zugeführt wird und dabei entweder durch den ersten Wärmetransportströmungspfad von dessen Einlassseite zu dessen Auslassseite strömt oder derart umgelenkt wird, dass es durch den zusätzlichen Strömungspfad strömt und in diesem aus der Aufwärmaustrittsseite austritt, wobei es auf dem Weg zu der Aufwärmaustrittsseite in dem zusätzlichen Strömungspfad aufgewärmt wird.

Dabei ist in diesem Fall der zusätzliche Strömungspfad in derselben Strömungspfadlage angeordnet wie der erste Wärmetransportströmungspfad.

Zur optimalen Ausbildung des Aufwärmwärmetauschers hat es sich als vorteilhaft erwiesen, wenn der mindestens eine zusätzliche Strömungspfad durch einen Teilflächenbereich einer Strömungspfadlage einer der Strömungspfadlagen gebildet ist, so dass nicht eine gesamte Strömungspfadlage zur Realisierung des zusätzlichen Strömungspfads erforderlich ist und somit die Wärmetauschereinheit kompakt ausgeführt werden kann.

Zu einem effizienten Wärmetausch ist hierzu vorgesehen, dass der zusätzliche Strömungspfad überlappend mit dem zweiten Wärmetransportströmungspfad angeordnet ist, so dass in einfacher Weise ein Wärmeaustausch zwischen dem ersten Wärmetransportströmungspfad und dem zweiten Wärmetransportströmungspfad zur Erwärmung des ersten Wärmetransportmediums realisiert werden kann.

Es ist aber auch denkbar, den zusätzlichen Strömungspfad so anzuordnen, dass dieser überlappend mit dem Wärmeabgebenden Kältemittelströmungspfad angeordnet ist, so dass durch den wärmeabgebenden Kältemittelströmungspfad ebenfalls die Möglichkeit besteht, das erste Wärmetransportmedium aufzuheizen, wenn dieses den zusätzlichen Strömungspfad durchströmt.

Eine konstruktiv besonders günstige Lösung sieht vor, dass der zusätzliche Strömungspfad überlappend mit einer Auslassseite des zweiten Wärmetransportströmungspfades angeordnet ist, so dass dadurch in optimaler Weise ein Wärmeübergang von dem zweiten Wärmetransportströmungspfad auf den ersten Wärmetransportströmungspfad realisiert werden kann.

Eine weitere vorteilhafte Lösung sieht vor, dass mittels eines Umleitungssystems für Kältemittel das Erwärmen des ersten Wärmetransportmediums erfolgt.

Beispielsweise ist die Einleitung von durch das Verdichten aufgeheiztem Kältemittel in den zusätzlichen Strömungspfad möglich.

Eine andere vorteilhafte Lösung sieht vor, dass mittels eines Umleitungssystems für Kältemittel dem wärmeaufnehmenden Kältemittelströmungspfad durch das Verdichten aufgeheiztes Kältemittel unter Hochdruck an Stelle von durch das Expansionsorgan expandiertem Kältemittel unter Niederdruck temporär zugeführt wird, so dass dadurch ebenfalls ein Aufheizen des ersten Wärmetauschermediums in dem üblicherweise wärmeaufnehmenden Wärmetauscher der Wärmetauschereinheit erfolgen kann.

Hinsichtlich der Art der Wärmetransportmedien wurden bislang keine näheren Angaben gemacht.

Insbesondere ist vorgesehen, dass der wärmeaufnehmende Wärmeströmungspfad zur Führung eines flüssigen Wärmetransportmediums ausgelegt ist, so dass die Wärmeabfuhr aus dem wärmeabgebenden Wärmetauscher in einfacher Weise erfolgen kann.

Eine vorteilhafte Lösung sieht insbesondere vor, dass das in dem zweiten Wärmetransportkreislauf umlaufende zweite Wärmetransportmedium ein flüssiges Wärmetransportmedium ist und dass insbesondere mit dem zweiten Wärmetransportkreislauf ein zweiter wärmeabgebender Wärmeübertrager verbindbar ist, mit welchem sich dann Wärme beispielsweise an die Umgebung oder an ein anderes wärmeaufnehmendes Medium abführen lässt.

Ferner ist die Aufnahme von Wärme technisch einfach realisierbar, wenn der wärmeabgebende Wärmetransportströmungspfad zur Führung eines flüssigen Wärmetransportmediums ausgebildet ist, da sich mit einem flüssigen Wärmetransportmedium Wärme mit technisch einfachen Mitteln übertragen lässt.

Eine vorteilhafte Lösung sieht beispielsweise vor, dass das in dem ersten Wärmetransportkreislauf umlaufende erste Wärmetransportmedium ein flüssiges Wärmetransportmedium ist und insbesondere mit dem ersten Wärmetransportkreislauf ein wärmeaufnehmender Wärmeübertrager verbindbar ist, der zur Kühlung des zu kühlenden Gutes oder der zu kühlenden Objekte eingesetzt werden kann.

Hinsichtlich der Ausbildung der Strömungspfadlagen im Strömungspfadlagenstapel wurden bislang keine näheren Angaben gemacht.

Beispielsweise könnte der Strömungspfadlagenstapel gemäß der US 6,564,862 ausgebildet sein.

So sieht eine andere vorteilhafte Lösung vor, dass der Strömungspfadlagenstapel durch den jeweiligen Strömungspfad in der jeweiligen Strömungspfadlage festlegende Strukturlagen sowie die Strukturlagen in der Stapelrichtung verschließende Decklagen gebildet ist.

Insbesondere sind dabei die Strukturlagen so ausgebildet, dass sie aus Flachmaterial mit ausgeschnittenen Konturen hergestellt sind, die allerdings quer zur Strukturlage nach oben und unten offen sind und somit durch die Decklagen verschlossen werden.

Dabei könnte es prinzipiell vorgesehen sein, dass für jede Strukturlage zwei Decklagen vorgesehen sind.

Besonders effizient ist jedoch der Wärmeaustausch dann in der Stapelrichtung, wenn zwischen jeweils zwei in der Stapelrichtung aufeinanderfolgenden Strukturlagen jeweils eine Decklage angeordnet ist, wobei diese Decklage jede der Strukturlagen auf einander zugewandten Seiten quer zur Stapelrichtung verschließt.

Insbesondere sind dabei die Decklagen aus einem wesentlich dünneren, beispielsweise mindestens einen Faktor 3 dünneren, Flachmaterial als die Strukturlagen ausgebildet, um insbesondere den Wärmeaustausch in der Stapelrichtung optimal zu gestalten.

Hinsichtlich der dem Kälteerzeuger zugeordneten Elemente wurden bislang keine näheren Angaben gemacht.

So sieht eine vorteilhafte Lösung vor, dass der Kälteerzeuger neben der Wärmetauschereinheit alle zu den Kältemittelströmungspfaden führenden Kältemittelleitungen und das Expansionsorgan des Kältemittelkreislaufs umfasst, so dass alle kältemittelführenden Komponenten in dem Kälteerzeuger integriert sind.

Insbesondere ist das Expansionsorgan in die entsprechende Kältemittelleitung integriert.

Eine weitere vorteilhafte Ausführungsform des Kälteerzeugers sieht vor, dass dieser mit der wärmeaufnehmenden Wärmetransportströmungspfadlage verbundene und bis zu Kuppelelementen führende Leitungsabschnitte des zweiten Wärmetransportkreislaufs aufweist, so dass die Kuppelelemente eine einfache Möglichkeit eröffnen, den zweiten Wärmetransportkreislauf zwischen einem diesem zugeordneten Wärmeübertrager und der wärmeaufnehmenden Wärmetransportströmungspfadlage aufzutrennen.

Darüber hinaus ist es ebenfalls vorteilhaft, wenn der Kälteerzeuger mit der wärmeabgebenden Wärmetransportströmungspfadlage verbundene und bis zu Kuppelelementen führende Leitungsabschnitte des ersten Wärmetransportkreislaufs aufweist, so dass auch bei dem ersten Wärmetransportkreislauf eine einfache Möglichkeit der Auftrennung desselben besteht, und zwar zwischen dem im ersten Wärmetransportkreislauf vorgesehenen Wärmeübertrager und der wärmeabgebenden Wärmetransportströmungspfadlage in der Wärmetauschereinheit.

Damit lässt sich auch insbesondere der Kälteerzeuger beim Austausch gegen einen anderen Kälteerzeuger in einfacher Weise sowohl von dem zweiten Wärmetransportkreislauf als auch von dem ersten Wärmetransportkreislauf trennen.

Eine weitere vorteilhafte Lösung sieht vor, dass der Kälteerzeuger eine Umwälzpumpe für den ersten Wärmetransportkreislauf umfasst, so dass auch diese Umwälzpumpe Teil des Kälteerzeugers ist.

Um die von dem Kälteerzeuger umfassten Komponenten in einfacher Weise zu einer Einheit zusammenführen zu können, ist vorzugsweise vorgesehen, dass die von dem Kälteerzeuger umfassten Komponenten mittels einer Modulbasis zu einem Kälteerzeugermodul zusammengefasst sind.

Dabei ist insbesondere vorgesehen, dass mindestens der Kältemittelverdichter und die Wärmetauschereinheit an der Modulbasis gehalten sind, während die anderen Komponenten des Kälteerzeugers entweder an der Modulbasis gehalten sind, wie beispielsweise die Kuppelelemente, und/oder die Umwälzpumpe des ersten Wärmetransportkreislaufs, oder die anderen Komponenten, wie beispielsweise die Leitungen des Kältemittelkreislaufs, an dem Kältemittelverdichter und/oder der Wärmetauschereinheit gehalten sein können.

Der erfindungsgemäße Kälteerzeuger erlaubt es insbesondere, das Volumen des Kältemittels im Kältemittelkreislauf zu reduzieren.

Besonders günstig ist es, wenn das Gewicht des Kältemittels im Kältemittelkreislauf kleiner als 150 Gramm ist.

Insbesondere ist vorgesehen, dass das Volumen des kondensierten Kältemittels im Kältemittelkreislauf kleiner als fünfhundert Kubikzentimeter, noch besser kleiner als vierhundert Kubikzentimeter ist.

Da das kondensierte Kältemittel üblicherweise im wärmeabgebenden Kältemittelströmungspfad lokalisiert ist, ist vorzugsweise vorgesehen, dass das Volumen des wärmeabgebenden Kältemittelströmungspfades kleiner als fünfhundert Kubikzentimeter, noch besser kleiner als vierhundert Kubikzentimeter ist.

Darüber hinaus betrifft die Erfindung eine Kälteanlage zum Kühlen eines zu kühlenden Raumes.

Eine derartige Kälteanlage sieht erfindungsgemäß vor, dass in dem zu kühlenden Raum ein Wärmeübertrager angeordnet ist, der in einem, mit flüssigem erstem Wärmetransportmedium arbeitenden ersten Wärmetransportkreislauf angeordnet ist und dass die Kälteanlage einen Kälteerzeuger nach einem der voranstehenden Ansprüche aufweist.

Das heißt, dass sich der vorstehend beschriebene Kälteerzeuger in einfacher Weise zu einer Kälteanlage zum Kühlen des zu kühlenden Raumes ausbauen lässt, wobei der Wärmetransport zwischen dem zu kühlenden Raum und dem Kälteerzeuger über den ersten Wärmetransportkreislauf in technisch einfacher Weise realisierbar ist, da keine kältemittelführenden Leitungen zu dem zu kühlenden Raum geführt werden müssen, sondern nur der erste, ein flüssiges Wärmetransportmedium führende Kältemittelkreislauf, der sich technisch mit weit einfacheren Komponenten und mit einfacherem Prüf- und Wartungsaufwand realisieren lässt, als ein Kältemittelkreislauf.

Darüber hinaus ist erfindungsgemäß vorgesehen, dass das erste Wärmetransportmedium ein wasserbasiertes Wärmetransportmedium ist, so dass sich der erste Wärmetransportkreislauf in besonders einfacher Weise realisieren lässt.

Ferner ist vorgesehen, dass das erste Wärmetransportmedium in dem ersten Wärmetransportkreislauf bei einem Druckniveau von kleiner 4 bar, noch besser kleiner 3 bar, und insbesondere durch Erzeugen einer Druckdifferenz von maximal 2 bar umgewälzt wird.

Auch hinsichtlich der Abfuhr der Wärme aus der Wärmetauschereinheit hat es sich als besonders günstig erwiesen, wenn die Kälteanlage einen Wärmeübertrager aufweist, der in einem mit flüssigem zweitem Wärmetransportmedium arbeitenden zweiten Wärmetransportkreislauf angeordnet ist, so dass sich auch die Abfuhr der Wärme aus der Wärmetauschereinheit mittels des zweiten Wärmetransportkreislaufs in einfacher Weise und mit technisch einfachen Mitteln realisieren lässt.

Ferner ist vorzugsweise auch hinsichtlich des zweiten Wärmetransportmediums vorgesehen, dass dieses ein wasserbasiertes Wärmetransportmedium ist.

Insbesondere lässt sich auch das zweite Transportmedium in dem zweiten Wärmetransportkreislauf in einfacher Weise bei einem Druckniveau von kleiner 4 bar, noch besser kleiner 3 bar, und insbesondere durch Erzeugen einer Druckdifferenz von maximal 2 bar umwälzen.

Weitere Merkmale und Vorteile der Erfindung sind Gegenstand der nachfolgenden Beschreibung sowie der zeichnerischen Darstellung einiger Ausführungsformen.

In der Zeichnung zeigen:
- Fig. 1: eine schematische Darstellung eines ersten Ausführungsbeispiels eines erfindungsgemäßen Kälteerzeugers eingesetzt in einer ersten Ausführungsform einer Kälteanlage;

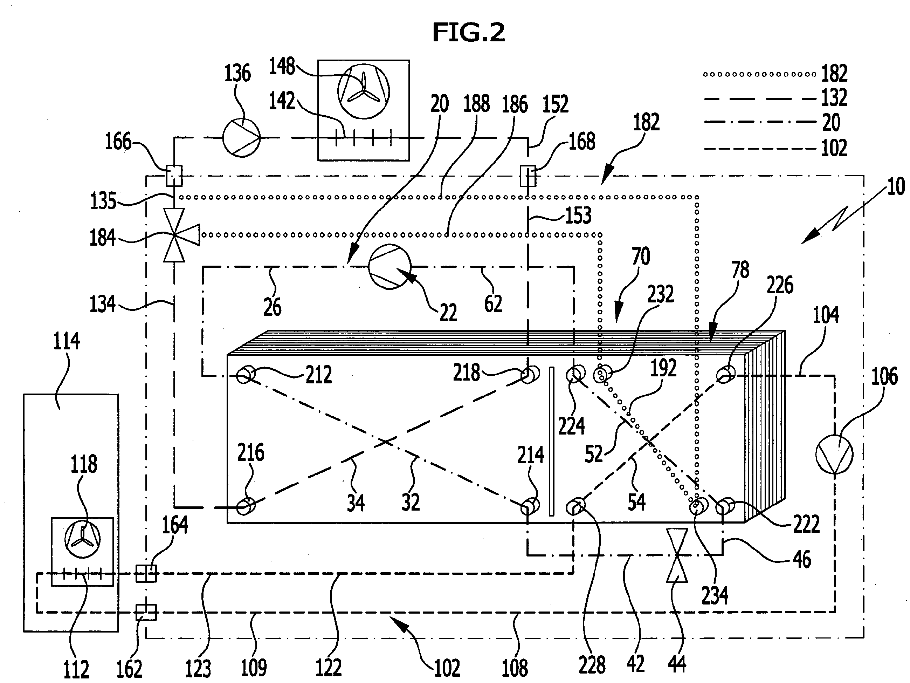

- Fig. 2: eine schematisierte Darstellung der Medienführung bei dem ersten Ausführungsbeispiel des erfindungsgemäßen Kälteerzeugers und der Kälteanlage;
- Fig. 3: eine Ausführungsform des ersten Ausführungsbeispiels des Kälteerzeugers eingesetzt in einer zweiten Ausführungsform einer Kälteanlage mit einer Steuerung und gegebenenfalls mehreren Wärmeübertragern;
- Fig. 4: eine schematische Darstellung ähnlich Fig. 1 eines zweiten Ausführungsbeispiels eines erfindungsgemäßen Kälteerzeugers eingesetzt in der ersten Ausführungsform der Kälteanlage;
- Fig. 5: eine schematische Darstellung ähnlich Fig. 2 der Medienführung beim zweiten Ausführungsbeispiel des erfindungsgemäßen Kälteerzeugers und der Kälteanlage;
- Fig. 6: eine schematische Darstellung ähnlich Fig. 1 eines dritten Ausführungsbeispiels eines erfindungsgemäßen Kälteerzeugers eingesetzt in der ersten Ausführungsform der Kälteanlage;
- Fig. 7: eine schematische Darstellung ähnlich Fig. 2 des dritten Ausführungsbeispiels des erfindungsgemäßen Kälteerzeugers und der Kälteanlage;
- Fig. 8: eine schematische Draufsicht auf eine erste Strömungspfadlage eines dritten Ausführungsbeispiels eines Kälteerzeugers;
- Fig. 9: eine schematische Draufsicht ähnlich Fig. 8 auf eine zweite Strömungspfadlage des dritten Ausführungsbeispiels;
- Fig. 10: einen Schnitt längs Linie 10-10 in Fig. 8 und 9 durch die zum Strömungspfadlagenstapel vereinigten Strömungspfadlagen;
- Fig. 11: einen Schnitt ähnlich Fig. 10 längs Linie 11-11 in Fig. 8 und 9;
- Fig. 12: eine schematische Darstellung ähnlich Fig. 5 der Medienführung bei dem dritten Ausführungsbeispiel des Kälteerzeugers und
- Fig. 13: eine schematische Darstellung einer dritten Ausführungsform der Kälteanlage mit mehreren Kälteerzeugern.

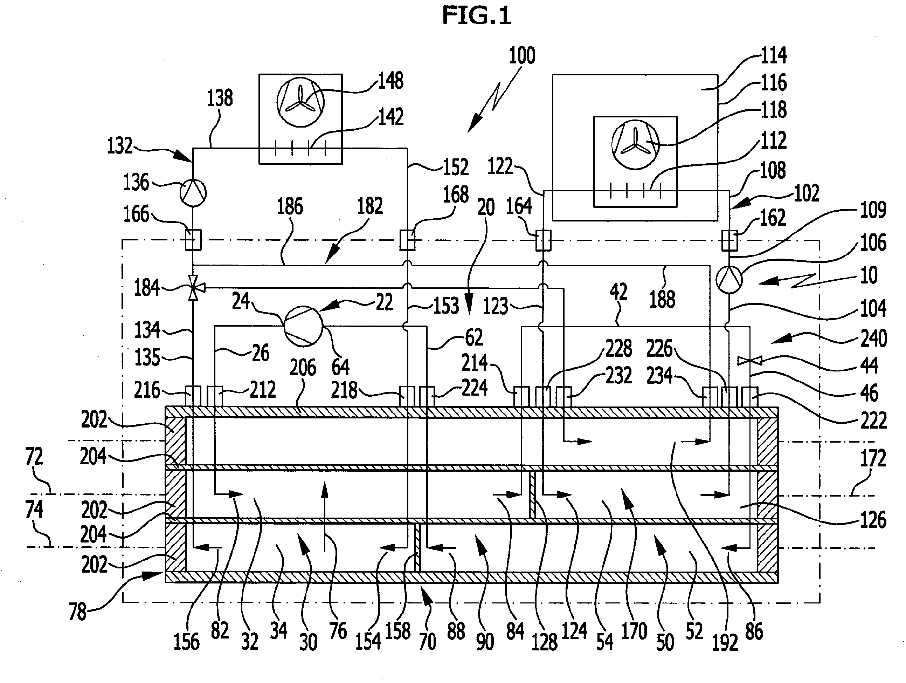

Ein in Fig. 1 dargestellter, und als Ganzes mit 10 bezeichnetes erstes Ausführungsbeispiel eines Kälteerzeugers, insbesondere ausgebildet als Kälteerzeugermodul, umfasst einen als Ganzes mit 20 bezeichneten Kältemittelkreislauf, in dem ein Kältemittelverdichter 22 angeordnet ist, an dessen Hochdruckanschluss 24 sich eine Hochdruckleitung 26 anschließt, die zu einem wärmeabgebenden Wärmetauscher 30 führt, der einen wärmeabgebenden Kältemittelströmungspfad 32 umfasst, der von dem mittels der Hochdruckleitung 26 zugeführten und durch den Verdichtungsvorgang erhitzten Kältemittel durchströmt ist, wobei der Kältemittelströmungspfad 32 Wärme an einen thermisch mit diesem Wärmetauscher 30 gekoppelten wärmeaufnehmenden Wärmetransportströmungspfad 34 abgibt.

Nach durchströmen des wärmeabgebenden Kältemittelströmungspfads 32 wird das Kältemittel über eine Leitung 42 einem Expansionsorgan 44 zugeführt, in welchem ein Entspannen des Kältemittels erfolgt, das daraufhin mittels einer Zuleitung 46 dem wärmeaufnehmenden Wärmetauscher 50 zugeführt wird und einen in dem Wärmetauscher 50 vorgesehenen wärmeaufnehmenden Kältemittelströmungspfad 52 durchströmt, welcher thermisch mit einem wärmeabgebenden Wärmetransportströmungspfad 54 gekoppelt ist.

Von dem wärmeaufnehmenden Kältemittelströmungspfad 52 strömt das Kältemittel dann über eine Rückleitung 62 zu einem Sauganschluss 64 des Kältemittelverdichters 22, so dass der Kältemittelkreislauf 20 einen geschlossenen Kreislauf für das Kältemittel darstellt.

Bei dem erfindungsgemäßen Kälteerzeuger sind sowohl der wärmeabgebende Wärmetauscher 30 als auch der wärmeaufnehmende Wärmetauscher 50 in einer als Ganzes mit 70 bezeichneten Wärmetauschereinheit integriert, die eine Vielzahl von Strömungspfadlagen 72 und 74 aufweist, in welchen Strömungspfade 32, 34, 52, 54 verlaufen, wobei die Strömungspfadlagen 72, 74 in einer Stapelrichtung 76 zu einem Strömungspfadlagenstapel 78 übereinander gestapelt sind und insbesondere in der Stapelrichtung 76 thermisch miteinander gekoppelt sind.

In der Fig. 1 sind die Strömungspfadlagen 72 und 74 lediglich exemplarisch durch zwei Strömungspfadlagen 72, 74 dargestellt, bei einer technischen Realisierung umfasst der Strömungspfadlagenstapel 78 eine Vielzahl von abwechslungsweise übereinander liegenden Strömungspfadlagen 72, 74.

Beispielsweise ist, wie in Fig. 1 dargestellt, in der Strömungspfadlage 72 einerseits der wärmeabgebende Kältemittelströmungspfad 32 vorgesehen und andererseits der wärmeabgebende Wärmetransportströmungspfad 54, während in der Strömungspfadlage 74 der wärmeaufnehmende Wärmetransportströmungspfad 34 vorgesehen ist und der wärmeaufnehmende Kältemittelströmungspfad 52.

Dabei sind der wärmeabgebende Kältemittelströmungspfad 32 und der wärmeaufnehmende Wärmetransportströmungspfad 34 quer zur Stapelrichtung 76 mit maximaler Überlappung in dem Strömungspfadlagenstapel 78 angeordnet und außerdem ist auch der wärmeabgebende Wärmetransportströmungspfad 54 mit maximaler Überlappung quer zur Stapelrichtung 76 zu dem wärmeaufnehmenden Kältemittelströmungspfad 52 angeordnet, so dass insbesondere durch die in Stapelrichtung 76 erfolgende thermische Kopplung ein optimaler Wärmeübergang zwischen dem wärmeabgebenden Kältemittelströmungspfad 32 und dem wärmeaufnehmenden Wärmetransportströmungspfad 34 sowie zwischen dem wärmeabgebenden Wärmetransportströmungspfad 54 und dem wärmeaufnehmenden Kältemittelströmungspfad 52 erfolgt.

Vorzugsweise sind, wie in Fig. 1 dargestellt, der wärmeaufnehmende Wärmetauscher 30 und der wärmeabgebende Wärmetauscher 50 in der Wärmetauschereinheit 70 quer zur Stapelrichtung 76 im Abstand von einander angeordnet.

Ferner erstreckt sich beispielsweise der wärmeabgebende Kältemittelströmungspfad 32 in der Strömungspfadlage 72 über den in der Strömungspfadlage 74 angeordneten wärmeaufnehmenden Wärmetransportströmungspfad 34 hinaus und überlappt mit dem wärmeaufnehmenden Kältemittelströmungspfad 52, der in der Strömungspfadlage 74 angeordnet ist, welcher sich quer zur Stapelrichtung 76 über den in der Strömungspfadlage 72 angeordneten wärmeabgebenden Wärmetransportströmungspfad 54 hinaus erstreckt.

Darüber hinaus sind ist zweckmäßigerweise eine Kältemitteleintrittseite 82 des wärmeabgebenden Kältemittelströmungspfades 32 in dem mit dem wärmeaufnehmenden Wärmetransportströmungspfad 34 überlappenden Bereich angeordnet und eine Kältemittelaustrittseite 84 des wärmeabgebenden Kältemittelströmungspfades 32 in dem mit dem wärmeaufnehmenden Kältemittelströmungspfad 52 überlappenden Bereich angeordnet.

Gleichzeitig ist eine Kältemitteleintrittsseite 86 des wärmeaufnehmenden Kältemittelströmungspfades 86 in dem mit dem wärmeabgebenden Wärmetransportströmungspfad 54 überlappenden Bereich angeordnet und eine Kältemittelaustrittsseite 88 in dem mit dem wärmeabgebenden Kältemittelströmungspfad 32 überlappenden Bereich.

Dies führt dazu, dass das in dem wärmeabgebenden Kältemittelströmungspfad 32 strömende Kältemittel zunächst Wärme an den wärmeaufnehmenden Wärmetransportströmungspfad 34 in dem mit diesem überlappenden Bereich abgibt und dann nahe seiner Kältemittelaustrittsseite 84 Wärme an den wärmeaufnehmenden Kältemittelströmungspfad 52 nahe dessen Kältemittelaustrittsseite 88 abgibt, so dass mit dem den wärmeaufnehmenden Kältemittelströmungspfad 52 ausgehend von der Kältemitteleintrittsseite 86 durchströmenden expandierten und wärmeaufnehmenden Kältemittel nahe der Kältemittelaustrittsseite 88 einerseits eine zusätzliche Kühlung des den wärmeabgebenden Kältemittelströmungspfad 32 durchströmenden Kältemittels vor dessen Eintritt in die Leitung 42 erfolgt und andererseits ein zusätzliches Aufwärmen des den wärmeaufnehmenden Kältemittelströmungspfad 52 durchströmenden Kältemittels kurz vor der Kältemittelaustrittsseite 88 erfolgt, so dass im Überlappungsbereich zwischen dem wärmeabgebenden Kältemittelströmungspfad 32 und dem wärmeaufnehmenden Kältemittelströmungspfad 52 insbesondere nahe der Kältemittelaustrittsseiten 84 und 88 derselben ein interner Wärmetauscher 90 vorliegt, der einerseits das Kältemittel vor Eintritt in die Leitung 42 und somit vor Expansion durch das Expansionsorgan 44 zusätzlich kühlt und andererseits das den wärmeaufnehmenden Kältemittelströmungspfad 52 durchströmende Kältemittel zusätzlich vor Eintritt in die Rückleitung 62 und somit vor Eintritt in den Kältemittelverdichter 22 noch geringfügig aufwärmt.

Mit der erfindungsgemäßen Lösung, insbesondere durch Integration der Kältemittelströmungspfade 32 und 52 in die Wärmetauschereinheit 70, lässt sich das Volumen des Kältemittels im Kältemittelkreislauf 20 minimieren und somit aufgrund der geringen Kältemittelmenge ein Kältemittelkreislauf 20 mit besonders geringem Potential für Kältemittelemissionen realisieren, wobei insbesondere in dem Kältemittelkreislauf 20 auch das Volumen der Leitungen zwischen den Kältemittelströmungspfaden 32 und 52 und die Verbindung mit dem Expansionsorgan 44, das außerhalb der Wärmetauschereinheit 70 angeordnet ist, minimiert ist.

Hinsichtlich des Wärmetransports von und zu den Wärmetransportströmungspfaden 54 und 34 wurden bislang keine näheren Angaben gemacht.

So ist beispielsweise beim Einsatz des Kälteerzeugers 10 in einer ersten Ausführungsform einer Kälteanlage 100 zur Wärmezufuhr zu dem Wärmetransportströmungspfad 54 ein erster Wärmetransportkreislauf 102 vorgesehen, in welchem ein flüssiges Wärmetransportmedium, beispielsweise auf Wasserbasis, insbesondere eine Mischung aus Wasser und Glykol oder Wasser und Salz etc., beispielsweise mit Druckdifferenzen kleiner 2 bar, umgewälzt wird, wobei eine Saugleitung 104 des ersten Wärmetransportkreislaufs 102 von dem Wärmetransportströmungspfad 54 zu einer Umwälzpumpe 106 geführt ist, von welcher aus dann eine Transportleitung 108 zu einem Wärmeübertrager 112 verläuft, welcher in einem zu kühlenden Raum 114, beispielsweise angeordnet in einem stationären Objekt 116, angeordnet ist, um diesen Raum 114 zu kühlen.

Beispielsweise ist das stationäre Objekt 116 ein Kühlmöbel und der zu kühlende Raum ein Lagerraum für Kühlgut in dem Kühlmöbel, wobei die Luft in dem zu kühlenden Raum 114 durch ein dem Wärmeübertrager 112 zugeordnetes Gebläse 118 zusätzlich umgewälzt wird, um gleiche Kühlbedingungen in dem zu kühlenden Raum 114 zu schaffen.

Besonders günstig ist es in diesem Fall, wenn der Kälteerzeuger 10, insbesondere als Kälteerzeugermodul 10, dem Kühlmöbel zugeordnet, insbesondere unmittelbar zugeordnet, ist und beispielsweise auf dem Kühlmöbel angeordnet ist, so dass der erste Wärmetransportkreislauf 102 auf kurzem Wege direkt in das Kühlmöbel geführt werden kann, um dort über den im Kühlmöbel angeordneten Wärmeübertrager 112 Wärme aufzunehmen und dessen Innenraum 114 zu kühlen.

Von dem Wärmeübertrager 112 läuft eine Rückleitung 122 des ersten Wärmetransportkreislaufs 102 zu dem Wärmetransportströmungspfad 54, so dass insgesamt das Wärmetransportmedium in der Lage ist, durch den Wärmeübertrager 112 in dem zu kühlenden Raum 114 Wärme aufzunehmen und in dem wärmeabgebenden Wärmetransportströmungspfad 54 an den wärmeaufnehmenden Kältemittelströmungspfad 52 aufgrund der bereits genannten guten thermischen Kopplung abzugeben.

Insbesondere ist im Wärmetransportströmungspfad 54 eine Austrittsseite 126 desselben überlappend zur Kältemitteleintrittsseite 86 des wärmeaufnehmenden Strömungspfads 52 angeordnet und eine Eintrittsseite 124 der Austrittsseite 126 gegenüberliegend nahe einer Trennung 128, welche in der Strömungspfadlage 72 den wärmeabgebenden Kältemittelströmungspfad 32 von dem wärmeabgebenden Wärmetransportströmungspfad 54 trennt.

Somit ist der erste Wärmetransportkreislauf 102 in der Lage, aus dem zu kühlenden Raum 114 Wärme mittels des Wärmeübertragers aufzunehmen und durch die thermische Kopplung des Wärmetransportströmungspfads 54 mit dem wärmeaufnehmenden Kältemittelströmungspfad 52 an diesen abzugeben.

Bei dem in Fig. 1 dargestellten Ausführungsbeispiel ist vorzugsweise vorgesehen, dass die Saugleitung 104 und die Umwälzpumpe 106 noch in dem Kälteerzeuger 10, insbesondere im Kälteerzeugermodul desselben, angeordnet sind, während ein Teil der Transportleitung 108 und der Rückleitung 122 Teile des Kälteerzeugers sind und ein anderer Teil außerhalb des Kälteerzeugers 10 verläuft.

Zum Abtransport der dem wärmeaufnehmenden Wärmetransportströmungspfad 34 zugeführten Wärme ist dieser in der Kälteanlage 100 mit einem zweiten Wärmetransportkreislauf 132 verbunden, welcher ebenfalls eine von dem Wärmetransportströmungspfad 34 wegführende Saugleitung 134 aufweist, die zu einer Umwälzpumpe 136 führt, welche mittels einer Transportleitung 138 mit einem Wärmeübertrager 142 verbunden ist, der beispielsweise mit der Umgebungsluft oder einem anderen wärmeaufnehmenden Medium in Wechselwirkung steht.

Beispielsweise ist dem zweiten Wärmeübertrager 142 ein Gebläse 148 zugeordnet, welches beispielsweise Umgebungsluft durch den Wärmeübertrager 142 strömen lässt.

Von dem Wärmeübertrager 142 führt eine Rückleitung 152 wiederum in den wärmeaufnehmenden Wärmetransportströmungspfad 34, wobei eine Austrittseite 156 des wärmeaufnehmenden Wärmetransportströmungspfads 34 überlappend zur Kältemitteleintrittsseite 82 des wärmeabgebenden Kältemittelströmungspfads 32 angeordnet ist und eine Eintrittsseite 154 des wärmeaufnehmenden Wärmetransportströmungspfades 34 der Austrittsseite 156 gegenüberliegend nahe einer Trennung 158 angeordnet ist, die in der Strömungspfadlage 74 den wärmeaufnehmenden Kältemittelströmungspfad 52 von dem wärmeaufnehmenden Wärmetransportströmungspfad 34 trennt.

Auch in dem zweiten Wärmetransportkreislauf 132 wird ein flüssiges Wärmetransportmedium, insbesondere ein wasserbasiertes Wärmetransportmedium, beispielsweise bei Druckdifferenzen kleiner 2 bar, umgewälzt, welches beispielsweise eine Mischung aus Wasser und Salz oder Wasser und Glykol etc. umfasst.

Da der zweite Wärmetransportkreislauf 132 üblicherweise Wärme auf einem Temperaturniveau transportiert das deutlich höher als Raumtemperatur liegt, kann dieser über gegebenenfalls weite Strecken verlaufen, um beispielsweise Wärme von dem Kälteerzeuger 10, beispielsweise angeordnet in einem Gebäude und insbesondere unmittelbar dem Kühlmöbel zugeordnet, bis zu dem an einer Außenseite oder auf einem Dach des Gebäudes angeordneten Wärmeübertrager 42 erstrecken.

Bei dem zweiten Wärmetransportkreislauf 132 verläuft beispielsweise ein Teil der Saugleitung 134 und ein Teil der Rückleitung 152 in dem Kälteerzeuger 10 und ein anderer Teil außerhalb des Kälteerzeugers 10.

Um gegebenenfalls die Kälteerzeuger 10 als Ganzes einfach austauschen zu können, sind beispielsweise in der Transportleitung 108, in der Rückleitung 122, in der Saugleitung 134 und in der Rückleitung 152 Schnellkupplungselemente 162, 164, 166, 168 vorgesehen, um ein Abtrennen der außerhalb der Kälteerzeugers 10 liegenden Teile der Wärmetransportkreisläufe 102 und 132 von den fest in dem Kälteerzeuger 10 installierten Teilen der Wärmetransportkreisläufe 102 und 132 in einfacher Weise und ein Verbinden mit einem Ersatzkälteerzeuger, insbesondere mit einem Ersatzkälteerzeugermodul, zu ermöglichen.

Da bei dem Wärmeübertrager 112, welcher dem zu kühlenden Raum 114 Wärme entziehen soll, in gewissen Zeitabständen ein Abtauen erforderlich ist, ist es erforderlich, das erste Wärmetransportmedium, das in dem ersten Wärmetransportkreislauf 102 durch die Umwälzpumpe 106 umgewälzt wird, zum Abtauen des Wärmeübertragers 112 zu erwärmen.

Hierzu umfasst die Wärmetauschereinheit 70 einen Aufwärmwärmetauscher 170 für das erste Wärmetransportmedium, zu dessen Ausbildung bei dem ersten Ausführungsbeispiel der Wärmetauschereinheit 70 mindestens eine oder mehrere weitere Strömungspfadlagen 172 zugeordnet sind, wobei die mindestens eine weitere Strömungspfadlage 172 bei dem ersten Ausführungsbeispiel einen zusätzlichen Strömungspfad 192 aufweist, der so angeordnet ist, dass dieser mit dem wärmeabgebenden Wärmetransportströmungspfad 54, beispielsweise auf einer den wärmeaufnehmenden Kältemittelströmungspfad 52 gegenüberliegenden Seite, überlappend angeordnet ist und ebenfalls in Stapelrichtung 76 mit diesem thermisch gekoppelt ist und somit den Aufwärmwärmetauscher 170 bildet.

Damit besteht die Möglichkeit, der Strömungspfadlage 172 mittels eines Umleitungssystems 182 Wärmetransportmedium aus dem zweiten Wärmetransportkreislauf 132 zuzuführen und dadurch das Wärmetransportmedium in dem wärmeabgebenden Wärmetransportströmungspfad 54 aufzuwärmen, so dass insgesamt damit das gesamte in dem ersten Wärmetauscherkeislauf 102 zirkulierende Wärmetransportmedium aufgewärmt werden kann und somit ein Abtauen des Wärmeübertragers 112 erfolgt.

Hierzu umfasst das Umleitungssystem 182 ein in der Saugleitung 134 angeordnetes Dreiwegeventil 184, welches so umschaltbar ist, dass in der Saugleitung 134 in Richtung der Umwälzpumpe 136 strömendes Wärmetransportmedium von dem wärmeaufnehmenden Wärmetransportströmungspfad 34 über die Saugleitung 134 dem Dreiwegeventil zugeführt wird, von einer über das Dreiwegeventil 184 mit der Saugleitung 134 verbindbaren Zweigleitung 186 dem wärmeabgebenden Strömungspfad 192 in der Strömungspfadlage 172 zugeführt wird und nach Durchströmen dieses Strömungspfades 192 wiederum von einer Rückleitung 188 des Umleitungssystems 182 aufgenommen und der Saugleitung 134 zwischen dem Dreiwegeventil 184 und der Umwälzpumpe 136 zugeführt wird, so dass letztlich die Umwälzpumpe 136 das in dem wärmeaufnehmenden Wärmetransportströmungspfad 34 aufgewärmte Wärmetransportmedium zunächst durch den Strömungspfad 192 hindurchsaugt, bevor diese das Wärmetransportmedium über die Transportleitung 138 dem Wärmeübertrager 142 zuführt.

Dies führt aufgrund der guten thermischen Kopplung zwischen dem Strömungspfad 192 und dem wärmeabgebenden Wärmetransportströmungspfad 54 insgesamt zu einer temporären Aufwärmung des Wärmetransportmediums in dem ersten Wärmetransportkreislauf 102 und somit zu einem Abtauen des ersten Wärmeübertragers 112 in dem zu kühlenden Raum 114.

Wird das Dreiwegeventil 184 wieder umgestellt, so strömt das aus dem wärmeaufnehmenden Wärmetransportströmungspfad 34 kommende Wärmetransportmedium über die Saugleitung 134 wieder direkt zur Umwälzpumpe 136, so dass das Umleitungssystem 182 wirkungslos ist und dem Wärmetransportströmungspfad 192 kein weiteres erwärmtes zweites Wärmetransportmedium zugeführt wird.

Vielmehr verbleibt das in dem Strömungspfad 192 stehende zweite Wärmetransportmedium in der Wärmetauschereinheit 70 und passt sich hinsichtlich seiner Temperatur der Temperatur des in dem wärmeabgebenden Wärmetransportströmungspfad 54 strömenden ersten Wärmetransportmediums an.

Hinsichtlich der Ausbildung des Strömungspfadlagenstapels 78 mit den Strömungspfadlagen 72, 74 und 172 wurden im Zusammenhang mit der bisherigen Erläuterung der einzelnen Ausführungsbeispiele keine näheren Angaben gemacht.

So sieht eine vorteilhafte Lösung vor, dass jede der Strömungspfadlagen 72, 74, 76 eine Strukturlage 202 und beiderseits der Strukturlage angeordnete Decklagen 204 umfasst, die die jeweilige Strukturlage 202 von der nächstfolgenden Strukturlage 202 trennen.

Jede der Strukturlagen 202 begrenzt ihrerseits in der jeweiligen Strömungspfadlage 72, 74, 172 die jeweiligen Strömungspfade, beispielsweise den Kältemittelströmungspfad 32 und den Wärmetransportströmungspfad 54 in der Strömungspfadlage 72 oder den Wärmetransportströmungspfad 34 und den Kältemittelströmungspfad 52 in der Strömungspfadlage 74 oder beispielsweise den Wärmetransportströmungspfad 192 in der Strömungspfadlage 172.

Insbesondere erfolgt auch durch die jeweilige Strukturlage 202 in der Strömungspfadlage 72 durch die Trennung 128 die Separierung des Kältemittelströmungspfads 32 und des Wärmetransportströmungspfads 54 und in der Strömungspfadlage 74 durch die Trennung 158 die Separierung des Wärmetransportströmungspfads 34 von dem Kältemittelströmungspfad 52.

Bei dem dargestellten Ausführungsbeispiel der Wärmetauschereinheit 70 wird eine oberste Strukturlage, beispielsweise die Strukturlage 202 durch eine Abschlusslage 206 zur Umgebung hin abgeschlossen, wobei in der Abschlusslage 206 Anschlüsse 212 und 214 für die zu dem Kältemittelströmungspfad 32 geführte Hochdruckleitung 26 beziehungsweise die Leitung 42 vorgesehen sind und außerdem Anschlüsse 216, 218 für den zweiten Wärmetransportkreislauf 132, insbesondere die zu diesem ebenfalls führende Saugleitung 134 beziehungsweise die zu dem Wärmetransportströmungspfad 34 führende Rückleitung 152 vorgesehen sind.

Ferner sind in der Abschlusslage 206 Anschlüsse 222 beziehungsweise 224 für die von dem Expansionsorgan 44 kommende Zuleitung 46 und für die Rückleitung 62 vorgesehen und außerdem noch Anschlüsse 226 und 228 für den ersten Wärmetransportkreislauf 102, insbesondere die zum Wärmetransportströmungspfad 54 geführte Saugleitung 104 beziehungsweise die Rückleitung 122, vorgesehen und zusätzlich noch Anschlüsse 232 und 234 für die zum Wärmetransportströmungspfad 192 geführte Zweigleitung 186 beziehungsweise die ebenfalls vom Wärmetransportströmungspfad 192 kommende Rückleitung 188.

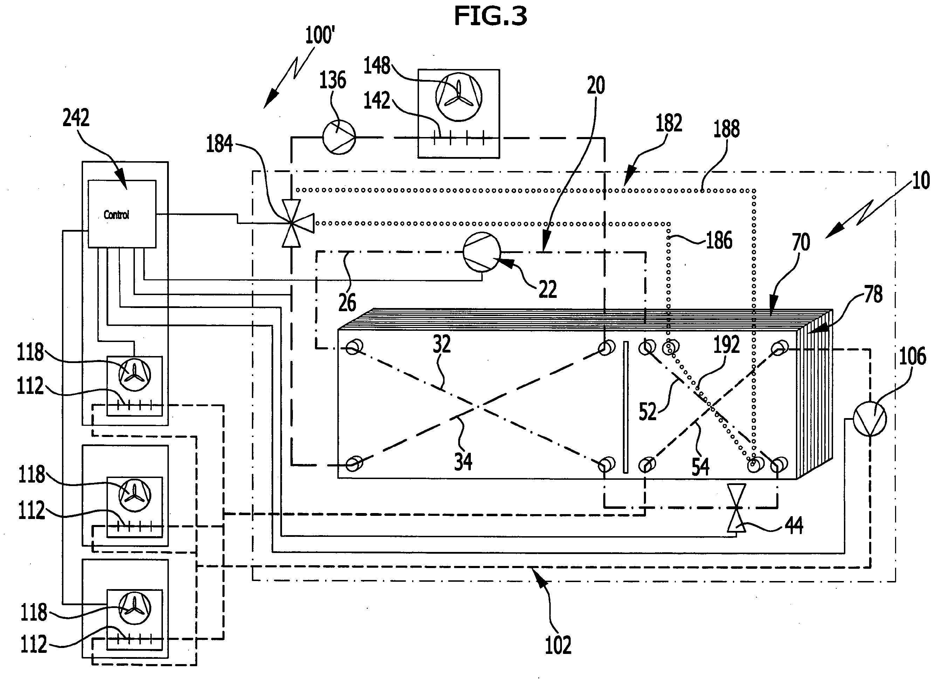

Zur Steuerung des Kälteerzeugers 10, insbesondere des Kälteerzeugermoduls 10 ist, wie in Fig. 3 dargestellt, eine beispielsweise vorzugsweise an einem Kühlmöbel oder gegebenenfalls an der Modulbasis 240 angeordnete Steuereinheit 242 vorgesehen, welche den Kältemittelverdichter 22, das Expansionsorgan 44, die Umwälzpumpe 106 und das Dreiwegeventil 184 ansteuert und somit in der Lage ist, selbsttätig das Abtauen von einem Wärmeübertrager 112 oder bei der dargestellten zweiten Ausführungsform der Kälteanlage 100' von mehreren Wärmeübertragern 112, die in dem ersten Wärmetransportkreislauf 102 parallel geschaltet sind, zu steuern.

Gleichzeitig lassen sich mit der Steuereinheit 242 auch noch die den Wärmeübertragern 112 zugeordneten Gebläse 118 steuern.

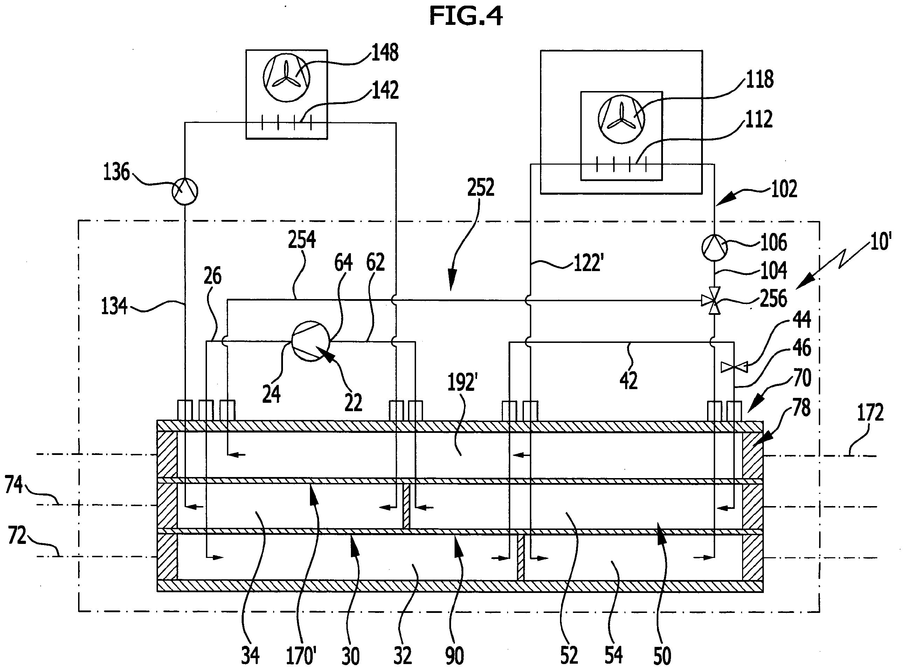

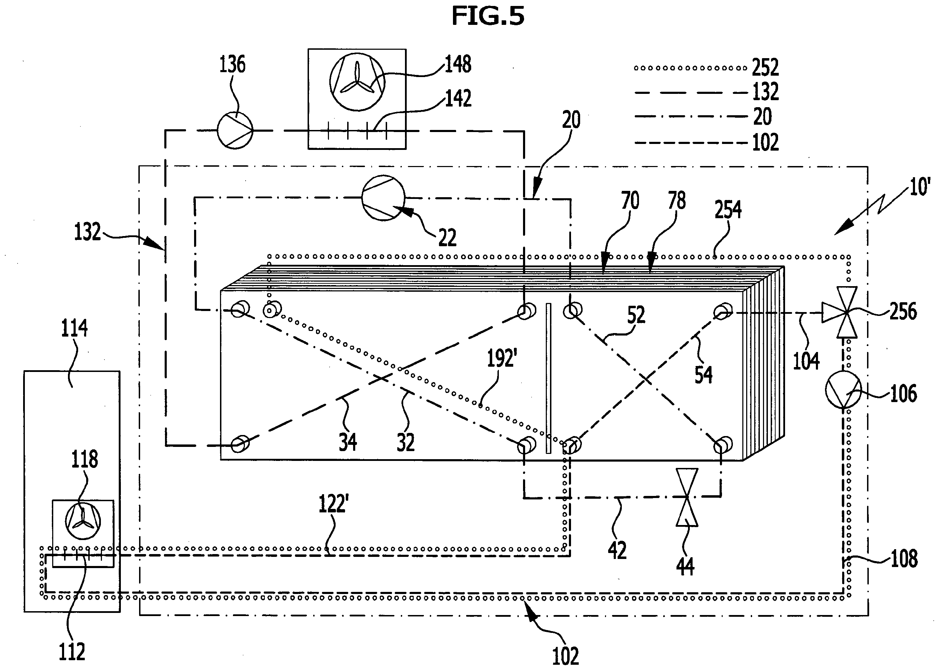

Bei einem zweiten Ausführungsbeispiel eines erfindungsgemäßen Kälteerzeugers 10', dargestellt in den Fig. 4 und 5 sind diejenigen Teile, die mit denen des ersten Ausführungsbeispiels identisch sind, mit denselben Bezugszeichen versehen, so dass auf die Ausführungen zu diesen im ersten Ausführungsbeispiel vollinhaltlich Bezug genommen werden kann.

Dies gilt insbesondere für den Wärmetauscher 30 und den Wärmetauscher 50 sowie den internen Wärmetauscher 90.

In gleicher Weise ist der Aufbau des Strömungspfadlagenstapels 78 der Wärmetauschereinheit 70 ähnlich mit dem ersten Ausführungsbeispiel, mit dem einzigen Unterschied, dass der von dem Aufwärmwärmetauscher 170' umfasste Strömungspfad 192' in der Strömungspfadlage 172 zum Abtauen des Wärmeübertragers 112 im ersten Wärmetransportkreislauf 102 in anderer Weise wie beim ersten Ausführungsbeispiel genutzt wird.

Hierzu ist aufgrund eines Umleitungssystems 252 die Rückleitung 122' des ersten Wärmetransportkreislaufs 102 so ausgebildet, dass sie das von dem Wärmeübertrager 112 zurückströmende erste Wärmetransportmedium sowohl dem Wärmetransportströmungspfad 54 als auch dem Strömungspfad 192' zuführt, der allerdings bei diesem Ausführungsbeispiel der Wärmetauschereinheit 70 unmittelbar angrenzend an den Wärmetransportströmungspfad 34 der Strömungspfadlage 74 angeordnet ist, wobei der Strömungspfad 192' vorzugsweise mit dem Wärmetransportströmungspfad 34 zur Bildung des Aufwärmwärmetauschers 170' überlappend angeordnet ist, so dass die Möglichkeit besteht, das im ersten Wärmetransportkreislauf 102 geführte Wärmetransportmedium beim Durchströmen des Strömungspfads 192' mittels des warmen zweiten Wärmetransportmediums im zweiten Wärmetransportströmungspfad 34 aufzuheizen.

Hierzu umfasst das Umleitungssystem 252 eine Rückführleitung 254 für das in dem Wärmetransportströmungspfad 192' aufgewärmte erste Wärmetransportmedium des ersten Wärmetransportkreislaufs 102, wobei die Rückleitung 254 in ein Dreiwegeventil 256 mündet, das in der zur Umwälzpumpe 106 geführten Saugleitung 104 angeordnet ist und es erlaubt, entweder über die Saugleitung 104 erstes Wärmetransportmedium aus dem Wärmetransportströmungspfad 54 anzusaugen oder bei Umstellung des Dreiwegeventils 256 Wärmetransportmedium aus dem Wärmetransportströmungspfad 192' anzusaugen, welches durch den Wärmetransportströmungspfad 34 aufgewärmt wurde und somit zum Abtauen des Wärmeübertragers 112 im ersten Wärmetransportkreislauf 102 eingesetzt werden kann.

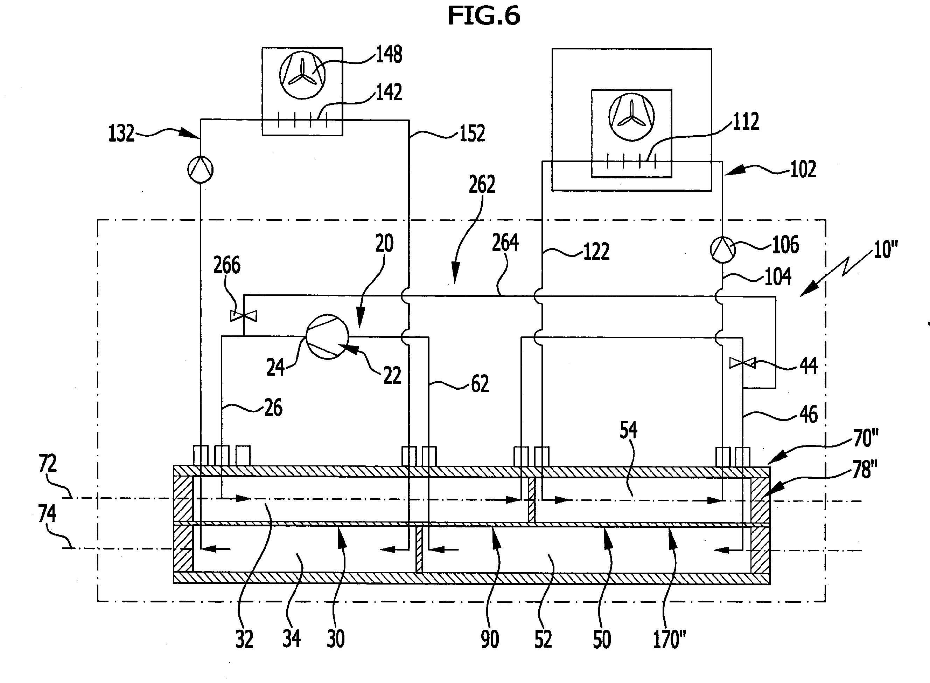

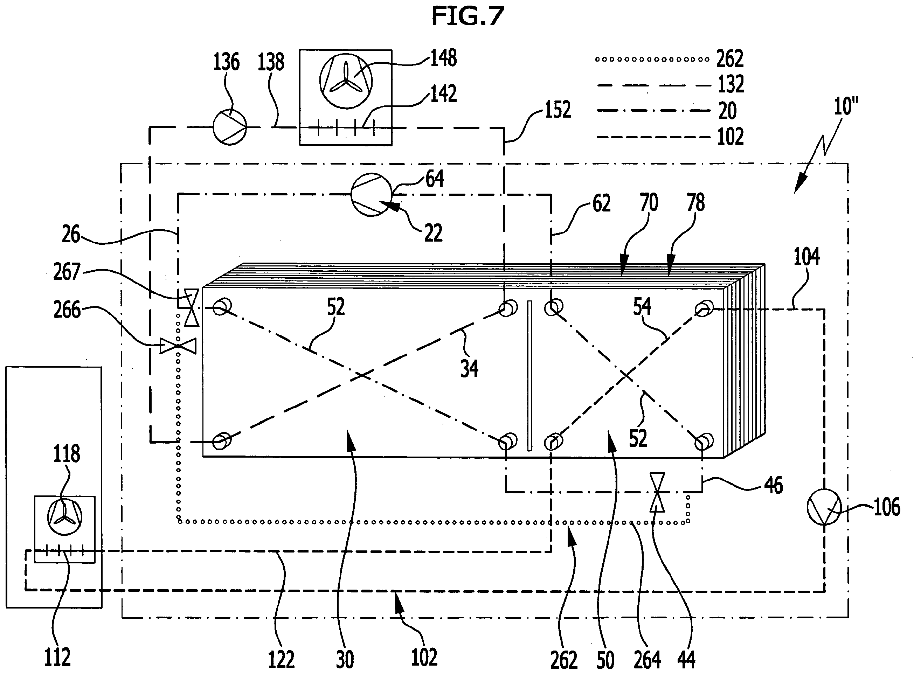

Bei einem dritten Ausführungsbeispiel einer erfindungsgemäßen Kälteerzeugers 10", dargestellt in Fig. 6 und Fig. 7 sind diejenigen Elemente, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Im Gegensatz zum ersten und zweiten Ausführungsbeispiel umfasst die Wärmetauschereinheit 70" in dem Strömungspfadlagenstapel 78" lediglich die Strömungspfadlagen 72 und 74, von denen - wie bereits im Zusammenhang mit dem ersten Ausführungsbeispiel erwähnt - nicht nur zwei, sondern eine Vielzahl derselben jeweils aufeinanderfolgend im Strömungspfadlagenstapel 78" angeordnet werden kann.

Insoweit sind auch der in die Wärmetauschereinheit 70 integrierte wärmeabgebende Wärmetauscher 30 und der wärmeaufnehmende Wärmetauscher 50 sowie der interne Wärmetauscher 90 in gleicher Weise ausgebildet wie bei dem ersten Ausführungsbeispiel, so dass auf die voranstehenden Ausführungen hierzu vollinhaltlich Bezug genommen werden kann.

Darüber hinaus sind auch der erste Wärmetransportkreislauf 102 und der zweite Wärmetransportkreislauf 132 identisch ausgebildet wie beim ersten Ausführungsbeispiel.

Ferner ist auch im Normalbetrieb, das heißt bei nicht erfolgendem Abtauen des Wärmeübertragers 112, der Kältemittelkreislauf 20 ausgebildet wie beim ersten Ausführungsbeispiel.

Im Gegensatz zum ersten Ausführungsbeispiel ist zum Aufwärmen des Wärmetransportmediums im ersten Wärmetransportkreislauf 102 vorgesehen, dass der wärmeaufnehmende Kältemittelströmungspfad 52 anstelle von expandiertem Kältemittel von aufgeheiztem unter Hochdruck stehendem Kältemittel durchströmt wird, wie es am Hockdruckanschluss 24 des Kältemittelverdichters 22 zur Verfügung steht.

Hierzu ist ein Umleitungssystem 262 vorgesehen, welches eine von der Hochdruckleitung 26 abzweigende Zweigleitung 264 umfasst, welche durch ein Absperrventil 266 absperrbar ist und in die zwischen dem Expansionsorgan 44 und dem Kältemittelströmungspfad 52 vorgesehene Zuleitung 46 mündet, so dass an Stelle des von dem Expansionsorgan 44 expandierten kalten Kältemittels unter Hochdruck stehendes und durch die Verdichtung im Kältemittelverdichter 22 aufgeheiztes gasförmiges Kältemittel dem Kältemittelströmungspfad 52 zugeführt wird und nach Durchströmen des Kältemittelpfads 52 wiederum über die Rückleitung 62 dem Sauganschluss 64 des Kältemittelverdichters 22 zugeführt wird.

Dabei wird temporär ein Aufwärmwärmetauscher 170" gebildet, in welchem ein Aufheizen des ersten Wärmetransportmediums in dem ersten Wärmetransportkreislaufs 102 beim Durchströmen des Wärmetransportströmungspfads 54 erfolgt und somit kann der Wärmeübertrager 112 abgetaut werden.

Um zu vermeiden, dass in diesem Fall auch noch Kältemittel durch den Kältemittelströmungspfad 52 strömt, ist vorzugsweise vorgesehen, dass das Expansionsorgan 44 ansteuerbar ist und gegebenenfalls so angesteuert werden kann, dass dieses keine nennenswerte Menge an Kältemittel expandiert.

Vorzugsweise ist in der Zuleitung zum Kältemittelströmungspfad 52 noch ein Absperrventil 267 vorgesehen, welches ein Ansammeln von Kältemittel im Kältemittelströmungspfad 52 verhindert, wenn ein temporäres Aufwärmen des ersten Wärmetransportmediums im Aufwärmwärmetauscher 170" erfolgen soll.

Alternativ können die Absperrventile 266 und 267 zu einem Dreiwegeventil zusammengefasst werden.

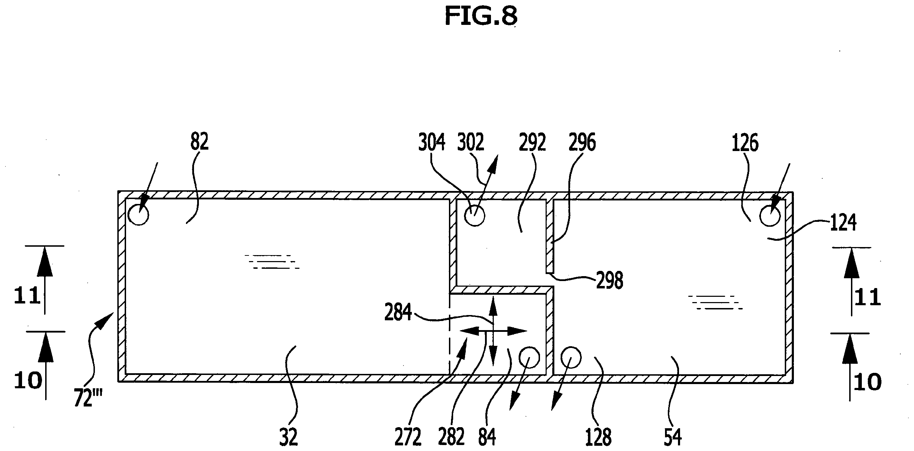

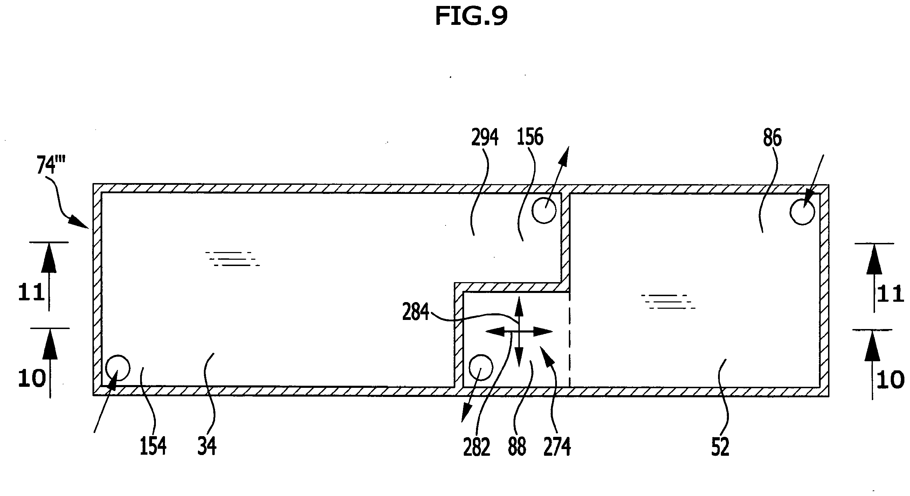

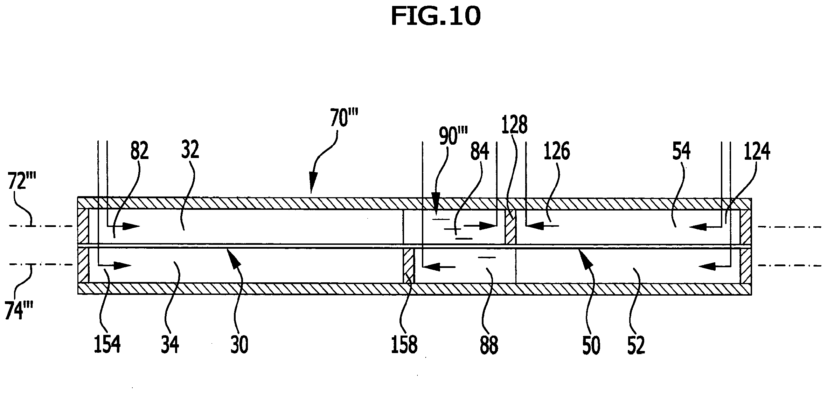

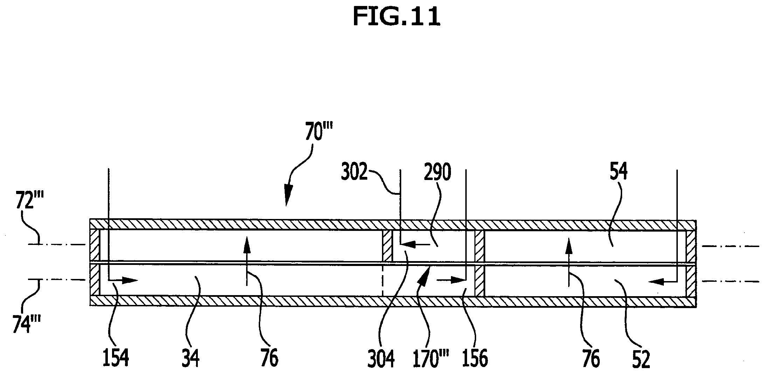

Bei einem vierten Ausführungsbeispiel eines erfindungsgemäßen Kälteerzeugers 10‴, dargestellt in den Fig. 8 bis 12 ist die Wärmetauschereinheit 70 ebenfalls aus Strömungslagenpfaden 72‴ und 74‴ gebildet, wobei die Strömungspfadlage 72‴ in gleicher Weise wie bei den voranstehenden Ausführungsbeispielen beschrieben, den wärmeabgebenden Kältemittelströmungspfad 32 sowie den wärmeabgebenden ersten Wärmetransportströmungspfad 54 aufweist und die Strömungspfadlage 74‴ den wärmeaufnehmenden zweiten Wärmetransportströmungspfad 34 sowie den wärmeaufnehmenden Kältemittelströmungspfad 52 aufweist.

Ferner bilden auch der wärmeabgebende Kältemittelströmungspfad 32 und der wärmeaufnehmende zweite Wärmetransportströmungspfad 34 den Wärmetauscher 30 und der wärmeaufnehmende Kältemittelströmungspfad 52 sowie der wärmeabgebende ersten Wärmetransportströmungspfad 54 den Wärmetauscher 50.

Zusätzlich überlappen der wärmeabgebende Kältemittelströmungspfad 32 und der wärmeaufnehmende Kältemittelströmungspfad 52 einander im Bereich ihrer Kältemittelaustrittsseiten 84 und 88 zur Bildung des internen Wärmetauschers 90‴, allerdings erfolgt die Überlappung des wärmeabgebenden Kältemittelströmungspfads 32 mit dem wärmeaufnehmenden Kältemittelströmungspfad 52 lediglich in Teilflächenbereichen 272 und 274 der Strömungspfadlagen 72‴ beziehungsweise 74‴, wobei die Teilflächenbereiche 272, 274 sich beispielsweise in einer Überlappungsrichtung 282 erstrecken welche die Überlappung der Strömungspfadlagen 32 und 54 in einer Richtung definiert, in welcher die Strömungspfadlagen 32 und 52 jeweils ausgehend von ihren Kältemitteleintrittsseiten 82 und 86 aufeinander zu verlaufen und in einer Querrichtung 284, die lediglich einen Teil der Querausdehnung der Kältemittelströmungspfade 32 und 52 im Bereich der Wärmetauscher 30 und 50 beträgt.

Dadurch wird die Möglichkeit eröffnet, durch Überlappung eines Teilflächenbereichs 292 der Strömungspfadlage 72‴ und eines Teilflächenbereichs 294 der Strömungspfadlage 74‴ einen Aufwärmwärmetauscher 170‴ zu schaffen.

Dabei erstreckt sich der zweite Wärmetransportströmungspfad 34 in den Teilflächenbereich 294 hinein, und zwar so, dass in diesem die Austrittsseite 156 liegt.

Ferner bildet der Teilflächenbereich 292 einen zusätzlichen Strömungspfad 290, der von dem ersten Wärmetransportströmungspfad 54 abzweigt.

Dem zusätzlichen Strömungspfad 290 ist eine Ableitung 302 für in diesem aufgewärmtes erstes Wärmetransportmedium zugeordnet, wobei im Normalbetrieb bei inaktiven Aufwärmwärmetauscher 170‴ das erste Wärmetransportmedium von der Eintrittsseite 124, die beispielsweise überlappend zur Kältemitteleintrittsseite 86 angeordnet ist, zur Austrittsseite 126 des ersten Wärmetransportströmungspfads 54 strömt, und nicht in den zusätzlichen Strömungspfad 290 der Strömungspfadlage 72‴ eintritt, welcher durch eine Trennung 296 von dem ersten Wärmetransportströmungspfad 54, wie er im Normalbetrieb des Kälteerzeugers 10‴ von dem ersten Wärmetransportmedium durchströmt ist, getrennt ist.

Die Trennung 292 ist jedoch mit einem Durchlass 298 versehen, welcher ein Übertreten von erstem Wärmetransportmedium aus dem ersten Wärmetransportströmungspfad 54 in den vom Aufwärmwärmetauscher 170‴ umfassten zusätzlichen Strömungspfad 290 erlaubt, wenn ein Austreten des ersten Wärmetransportmediums im Austrittsbereich 126 unterbunden ist.

In diesem Fall durchströmt das erste Wärmetransportmedium den Durchlass 298 und tritt in den zusätzlichen Strömungspfad 290 ein, von welchem ausgehend eine Ableitung 302 in einem Aufwärmaustrittsbereich 304, der dem Durchlass 298 gegenüberliegend angeordnet ist, erfolgt.

Der den zusätzlichen Strömungspfad 290 umfassende Teilbereich 292 überlappt mit dem Teilbereich 294, in welchem die Austrittsseite 156 des Wärmetransportströmungspfades 34 liegt, so dass in dem Aufwärmwärmetauscher 170‴ die Möglichkeit besteht, mit dem in dem zweiten Wärmetransportströmungspfad 34 erwärmten zweiten Wärmetransportmedium das erste Wärmetransportmedium durch einen Wärmeübergang in der Stapelrichtung 76 aufzuwärmen, wenn dieses den zusätzlichen Strömungspfad 290 durchströmt.

Auch bei dem zweiten Wärmetransportströmungspfad 34 liegt die Eintrittsseite 154 überlappend zur Kältemitteleintrittsseite 82, während die Austrittsseite 156 in dem Teilbereich 294 der Strömungspfadlage 74‴ angeordnet ist, der neben dem Teilbereich 274 beispielsweise in der Querrichtung 284 versetzt angeordnet ist.

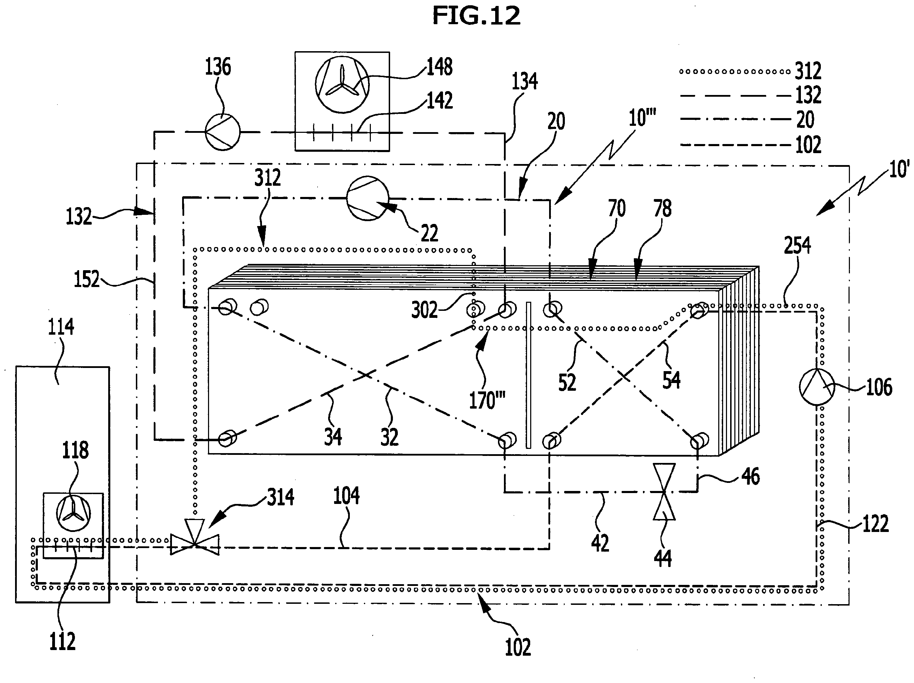

Ferner ist, wie in Fig. 12 dargestellt, dem ersten Wärmetransportkreislauf 102 ein Umleitungssystem 312 zugeordnet, welches die Ableitung 302 umfasst, die zu einem Dreiwegeventil 314 führt, welches in der Saugleitung 104 des ersten Wärmetransportkreislaufs 102 angeordnet ist und es erlaubt, entweder das erste Wärmetransportmedium, das im ersten Wärmetransportströmungspfad 54 strömt, in Richtung der Austrittsseite 126 strömen zu lassen oder durch den Durchlass 298 in den Aufwärmwärmetauscher 170‴ eintreten zu lassen, und dort in dem zusätzlichen Strömungspfad 290 in Richtung der Aufwärmaustrittsseite 304 strömen zu lassen, so dass bei diesem Strömungsverlauf des ersten Wärmetransportmediums ein Aufwärmen des ersten Wärmetransportmediums durch das zweite Wärmetransportmedium erfolgt.

Im Übrigen sind auch bei dem vierten Ausführungsbeispiel alle diejenigen Elemente, die mit den voranstehenden Ausführungsbeispielen identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

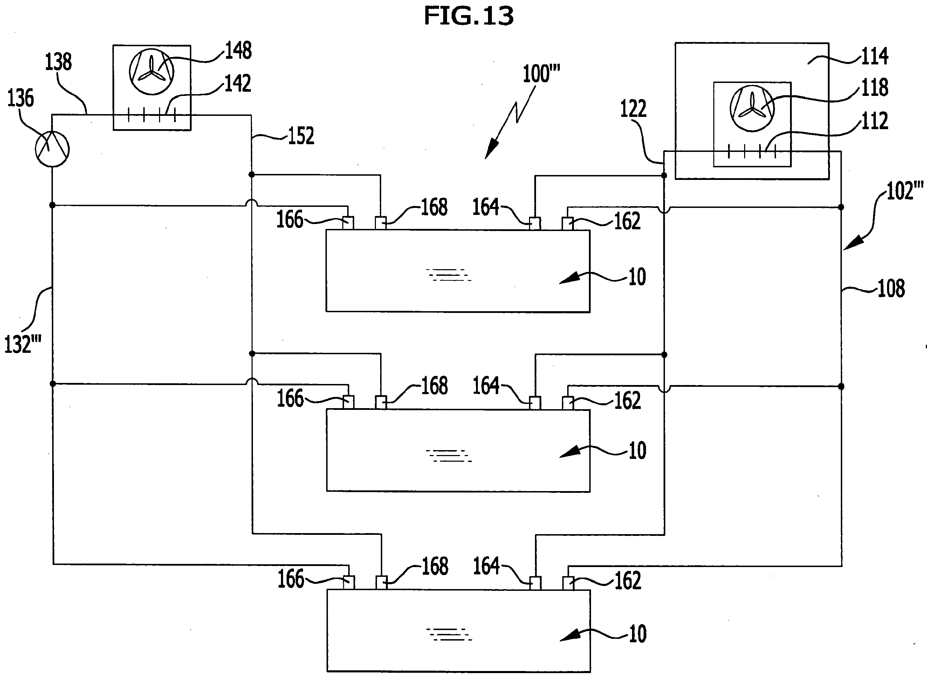

Eine weitere Einsatzmöglichkeit der erfindungsgemäßen Kälteerzeuger 10 in einer Kälteanlage 100‴, insbesondere ausgebildet als Kälteerzeugermodule 10, ist in Fig. 13 dargestellt.

Hierbei ist es denkbar, mehrere Kälteerzeuger 10 parallel in dem ersten Wärmetransportkreislauf 102 einzusetzen und gleichzeitig diese Kälteerzeuger 10 parallel mit dem zweiten Wärmetransportkreislauf 132‴ zu verbinden.

Damit besteht die Möglichkeit, zumindest in dem ersten Wärmetransportkreislauf 102‴ gegebenenfalls redundant oder durch variable Zuschaltung einzelner Kälteerzeuger 10 unterschiedliche Kälteleistungen abdecken zu können.

Dabei erfolgt jeweils die Verbindung zu dem ersten Kältemittelkreislauf 102‴ mittels der Schnellkuppelelemente 162 und 164 und die Verbindung zu dem zweiten Wärmetransportkreislauf 132" mittels der Schnellkuppelelemente 166, 168.

Im Übrigen arbeiten die Kälteerzeuger 10 beispielsweise gemäß einem der voranstehenden Ausführungsbeispiele.

## Patentansprüche

1. Kälteerzeuger (10), umfassend einen Kältemittelkreislauf (20) mit einem in dem Kältemittelkreislauf (20) angeordneten Kältemittelverdichter (22), einem mit einem Hochdruckanschluss (24) des Kältemittelverdichters (22) verbundenen wärmeabgebenden Wärmetauscher (30), einem auf den wärmeabgebenden Wärmetauscher (30) folgenden Expansionsorgan (44), und einem auf das Expansionsorgan (44) folgenden wärmeaufnehmenden Wärmetauscher (50), welcher wiederum ausgangsseitig mit einem Sauganschluss (64) des Kältemittelverdichters (22) verbunden ist, wobei der Kälteerzeuger (10) eine Wärmetauschereinheit (70) umfasst, in welcher der wärmeabgebende Wärmetauscher (30) und der wärmeaufnehmende Wärmetauscher (50) integriert sind, wobei die Wärmetauschereinheit (70) einen in Stapelbauweise aufgebauten Strömungspfadlagenstapel (78) umfasst, der in einer Stapelrichtung (76) aufeinanderfolgende Strömungspfadlagen (72, 74, 172) aufweist, wobei zur Bildung des wärmeabgebenden Wärmetauschers (30) in dem Strömungspfadlagenstapel (78) mindestens ein wärmeabgebender Kältemittelströmungspfad (32) und mindestens ein wärmeaufnehmender zweiter Wärmetransportströmungspfad (34) vorgesehen sind, wobei der zweite Wärmetransportströmungspfad (34) von einem in einem zweiten Wärmetransportkreislauf (132) geführten zweiten Wärmetransportmedium durchströmbar ist, wobei zur Bildung des wärmeaufnehmenden Wärmetauschers (50) in dem Strömungspfadlagenstapel (78) mindestens ein wärmeaufnehmender Kältemittelströmungspfad (52) und mindestens ein wärmeabgebender erster Wärmetransportströmungspfad (54) vorgesehen ist, und wobei der erste Wärmetransportströmungspfad (54) von einem in einem ersten Wärmetransportkreislauf (102) geführten ersten Wärmetransportmedium durchströmbar ist,
**dadurch gekennzeichnet, dass** der wärmeabgebende Kältemittelströmungspfad (32) und der wärmeabgebende erste Wärmetransportströmungspfad (54) in einer Strömungspfadlage (72) des Strömungspfadlagenstapels (78) angeordnet sind, und/oder der wärmeaufnehmende Kältemittelströmungspfad (52) und der wärmeaufnehmende zweite Wärmetransportströmungspfad (34) in einer Strömungspfadlage (74) des Strömungspfadlagenstapels (78) angeordnet sind.

2. Kälteerzeuger nach Anspruch 1, wobei in dem wärmeabgebenden Wärmetauscher (30) der mindestens eine wärmeabgebende Kältemittelströmungspfad (32) und der mindestens eine wärmeaufnehmende zweite Wärmetransportströmungspfad (34) für das zweite Wärmetransportmedium in in Stapelrichtung (76) aufeinanderfolgenden Strömungspfadlagen (72, 74) angeordnet sind und der Wärmeaustausch parallel zur Stapelrichtung (76) erfolgen kann.

3. Kälteerzeuger nach einem der voranstehenden Ansprüche, wobei in dem wärmeaufnehmenden Wärmetauscher (50) der mindestens eine wärmeaufnehmende Kältemittelströmungspfad (52) und der mindestens eine wärmeabgebende erste Wärmetransportströmungspfad (54) für das erste Wärmetransportmedium in in Stapelrichtung (76) aufeinanderfolgenden Strömungspfadlagen (74, 72) angeordnet sind und der Wärmeaustausch parallel zur Stapelrichtung (76) erfolgen kann.

4. Kälteerzeuger nach einem der voranstehenden Ansprüche, wobei der wärmeabgebende Wärmetauscher (30) und der wärmeaufnehmende Wärmetauscher (50) in der Wärmetauschereinheit (70) in Richtung quer zur Stapelrichtung (76) nebeneinanderliegend angeordnet sind, dass insbesondere der wärmeabgebende Wärmetauscher (30) und der wärmeaufnehmende Wärmetauscher (50) in Richtung quer zur Stapelrichtung (76) im Abstand voneinander angeordnet sind.

5. Kälteerzeuger nach Anspruch 4, wobei zwischen dem wärmeabgebenden Wärmetauscher (30) und dem wärmeaufnehmenden Wärmetauscher (50) ein innerer Wärmetauscher (90) angeordnet ist, dass insbesondere der innere Wärmetauscher (90) durch Überlappung des wärmeabgebenden Kältemittelströmungspfades (32) in einer Strömungspfadlage (72) und des wärmeaufnehmenden Kältemittelströmungspfades (52) in einer benachbarten Strömungspfadlage (74) gebildet ist, und/oder dass insbesondere in dem inneren Wärmetauscher (90) ein Abkühlen des Kältemittels im Bereich einer Kältemittelaustrittsseite des wärmeabgebenden Kältemittelströmungspfades (32) und ein Aufwärmen des Kältemittels im Bereich einer Kältemittelaustrittsseite des wärmeaufnehmenden Kältemittelströmungspfades (52) erfolgen kann.

6. Kälteerzeuger nach Anspruch 5, wobei der wärmeabgebende Kältemittelströmungspfad (32) eine Kältemitteleintrittsseite (82) und eine Kältemittelaustrittsseite (84) und der wärmeaufnehmende Kältemittelströmungspfad (52) eine Kältemitteleintrittsseite (86) und eine Kältemittelaustrittsseite (88) aufweisen, und dass die Kältemittelaustrittsseite (84) des wärmeabgebenden Kältemittelströmungspfades (32) und die Kältemittelaustrittsseite (88) des wärmeaufnehmenden Kältemittelströmungspfades (52) miteinander überlappend angeordnet sind.

7. Kälteerzeuger nach einem der voranstehenden Ansprüche, wobei zum temporären Erwärmen des ersten Wärmetransportmediums im ersten Wärmetransportkreislauf (102) in der Wärmetauschereinheit (70) dem ersten Wärmetransportmedium Wärme zuführbar ist, wobei die Strömungspfade (34, 54) für das erste Wärmetransportmedium und das zweite Wärmetransportmedium getrennt bleiben.

8. Kälteerzeuger nach einem der voranstehenden Ansprüche, wobei der Kälteerzeuger ein Umleitungssystem (182, 252, 312) für Wärmetransportmedium aufweist, mit welchem in der Wärmetauschereinheit (70) durch Umleiten von Wärmetransportmedium dem ersten Wärmetransportmedium Wärme zuführbar ist.

9. Kälteerzeuger nach einem der voranstehenden Ansprüche, wobei die Wärmetauschereinheit (70) einen Aufwärmwärmetauscher (170) zum temporären Aufwärmen des ersten Wärmetransportmediums umfasst, und zur Bildung des Aufwärmwärmetauschers (170) mindestens eine Strömungspfadlage (72, 172) der Wärmetauschereinheit (70) mindestens einen zusätzlichen Strömungspfad (192, 290) zum temporären Aufwärmen des ersten Wärmetransportmediums aufweist, wobei insbesondere der mindestens eine zusätzliche Strömungspfad (192) in einer Strömungspfadlage (72, 172) vorgesehen ist, die in Stapelrichtung (76) an einen der wärmeabgebenden ersten Wärmetransportströmungspfade (54) für das erste Wärmetransportmedium angrenzt, mit diesem überlappend angeordnet ist und von dem zweiten Wärmetransportmedium durchströmbar ist, ODER der mindestens eine zusätzliche Strömungspfad (192') zum Aufwärmen des ersten Wärmetransportmediums von dem ersten Wärmetransportmedium durchströmbar ist, in Stapelrichtung (76) an den mindestens einen wärmeaufnehmenden Wärmetransportströmungspfad (34) für das zweite Wärmetransportmedium angrenzt und mit diesem überlappend angeordnet ist, UND/ODER entweder der mindestens eine zusätzliche Strömungspfad (192, 192') in einer zusätzlichen Strömungspfadlage (172) der Wärmetauschereinheit (70) angeordnet ist, oder der mindestens eine zusätzliche Strömungspfad (290) jeweils in derselben Strömungspfadlage (72) angeordnet ist wie einer der Wärmetransportströmungspfade (34, 54), wobei der mindestens eine von dem ersten Wärmetransportmedium durchströmte erste Wärmetransportströmungspfad (54) sich von einer Einlassseite (126) zu einer Auslassseite (128) erstreckt und dass von dem ersten Wärmetransportströmungspfad der jeweilige zusätzliche Strömungspfad (290) abzweigt der zu einer Aufwärmaustrittsseite (304) verläuft, UND/ODER der mindestens eine zusätzliche Strömungspfad (290) durch einen Teilflächenbereich (292) einer der Strömungspfadlagen (72, 172) gebildet ist, wobei der mindestens eine zusätzliche Strömungspfad (290) überlappend mit dem zweiten Wärmetransportströmungspfad (34) angeordnet ist, UND/ODER der mindestens eine zusätzliche Strömungspfad (290) überlappend mit einer Auslassseite (156) des zweiten Wärmetransportströmungspfades (34) angeordnet ist.

10. Kälteerzeuger nach einem der voranstehenden Ansprüche, wobei mittels eines Umleitungssystems (262) für Kältemittel dem wärmeaufnehmenden Kältemittelströmungspfad (52) durch das Verdichten aufgeheiztes Kältemittel unter Hochdruck an Stelle von durch das Expansionsorgan (44) expandiertem Kältemittel unter Niederdruck zugeführt wird.

11. Kälteerzeuger nach einem der voranstehenden Ansprüche, wobei der wärmeaufnehmende Wärmetransportströmungspfad (34) zur Führung eines flüssigen Wärmetransportmediums ausgelegt ist, dass insbesondere das in dem zweiten Wärmetransportkreislauf (132) umlaufende zweite Wärmetransportmedium ein flüssiges Wärmetransportmedium ist und insbesondere mit dem zweiten Wärmetransportkreislauf (132) ein zweiter wärmeabgebender Wärmeübertrager (142) verbindbar ist.

12. Kälteerzeuger nach einem der voranstehenden Ansprüche, wobei der wärmeabgebende Wärmetransportströmungspfad (54) zur Führung eines flüssigen Wärmetransportmediums ausgebildet ist, dass insbesondere das in dem ersten Wärmetransportkreislauf (102) umlaufende erste Wärmetransportmedium ein flüssiges Wärmetransportmedium ist und insbesondere mit dem ersten Wärmetransportkreislauf (102) ein wärmeaufnehmender Wärmeübertrager (112) verbindbar ist.

13. Kälteerzeuger nach einem der voranstehenden Ansprüche, wobei der Strömungspfadlagenstapel (78) durch den jeweiligen Strömungspfad (32, 34, 52, 54, 172) in der jeweiligen Strömungspfadlage (72, 74, 192) festlegende Strukturlagen (202) sowie die Strukturlagen (202) in der Stapelrichtung (76) verschließende Decklagen (204) gebildet ist, und insbesondere zwischen jeweils zwei in der Stapelrichtung (76) aufeinanderfolgenden Strukturlagen (202) jeweils eine Decklage (204) angeordnet ist.

14. Kälteerzeuger nach einem der voranstehenden Ansprüche, wobei dieser alle zu den Kältemittelströmungspfaden (32, 52) führenden Kältemittelleitungen (26, 42, 46, 62) und das Expansionsorgan (44) des Kältemittelkreislaufs (20) umfasst, und/oder insbesondere dieser mit dem wärmeaufnehmenden Wärmetransportströmungspfad (34) verbundene und bis zu Kuppelelementen (166, 168) führende Leitungsabschnitte (135, 153) des zweiten Wärmetransportkreislaufs (132) aufweist, und/oder insbesondere dieser mit dem wärmeabgebenden Wärmetransportströrmungspfad (54) verbundene und bis zu Kuppelelementen (162, 164) führende Leitungsabschnitte (109, 123) des ersten Wärmetransportkreislaufs (102) aufweist, und/oder dass insbesondere dieser eine Umwälzpumpe (106) für den ersten Wärmetransportkreislauf (102) umfasst.

15. Kälteerzeuger nach Anspruch 14, wobei die von diesen umfassten Komponenten mittels einer Modulbasis (240) zu einem Kälteerzeugermodul zusammengefasst sind, und insbesondere mindestens der Kältemittelverdichter (22) und die Wärmetauschereinheit (70) an der Modulbasis (240) gehalten sind.

16. Kälteanlage zum Kühlen eines zu kühlenden Raumes (114), wobei in dem zu kühlenden Raum (114) ein Wärmeübertrager (112) angeordnet ist, der in einem mit flüssigem erstem Wärmetransportmedium arbeitenden ersten Wärmetransportkreislauf (102) angeordnet ist, und dass die Kälteanlage (100) einen Kälteerzeuger (10) nach einem der voranstehenden Ansprüche aufweist, wobei optional das erste Wärmetransportmedium ein wasserbasiertes Wärmetransportmedium ist, und/oder optional das erste Wärmetransportmedium in dem ersten Wärmetransportkreislauf (102) durch Erzeugen einer Druckdifferenz von maximal 2 bar umgewälzt wird, wobei optional die Kälteanlage einen Wärmeübertrager (142) aufweist, der in einem mit flüssigem zweitem Wärmetransportmedium arbeitenden zweiten Wärmetransportkreislauf (132) angeordnet ist, und optional insbesondere das zweite Wärmetransportmedium ein wasserbasiertes Wärmetransportmedium ist, und/oder optional das zweite Wärmetransportmedium in dem zweiten Wärmetransportkreislauf (132) durch Erzeugen einer Druckdifferenz von maximal 2 bar umgewälzt wird.

## Claims

1. A cold generator (10), comprising a refrigerant circuit (20) with a refrigerant compressor (22) arranged in the refrigerant circuit (20), a heat-emitting heat exchanger (30) connected to a highpressure connection (24) of the refrigerant compressor (22), an expansion member (44) following on from the heat-emitting heat exchanger (30), and a heat-absorbing heat exchanger (50) following on from the expansion member (44), which heat-absorbing heat exchanger is in turn connected on the output side to an intake connection (64) of the refrigerant compressor (22), wherein the cold generator (10) comprises a heat exchanger unit (70) in which the heat-emitting heat exchanger (30) and the heat-absorbing heat exchanger (50) are integrated, wherein the heat exchanger unit (70) comprises a flow path layer stack (78) which is built up in a stacked construction and has flow path layers (72, 74, 172) arranged successively in a stack direction (76), wherein, in order to form the heat-emitting heat exchanger (30) in the flow path layer stack (78), at least one heat-emitting refrigerant flow path (32) and at least one heat-absorbing second heat transport flow path (34) are provided, wherein a second heat transport medium guided in a second heat transport circuit (132) is arranged to flow through the second heat transport flow path (34), wherein at least one heat-absorbing refrigerant flow path (52) and at least one heat-emitting first heat transport flow path (54) are provided in order to form the heat-absorbing heat exchanger (50) in the flow path layer stack (78), and wherein a first heat transport medium guided in a first heat transport circuit (102) is arranged to flow through the first heat transport flow path (54),
**characterised in that** the heat-emitting refrigerant flow path (32) and the heat-emitting first heat transport flow path (54) are arranged in a flow path layer (72) of the flow path layer stack (78), and/or the heat-absorbing refrigerant flow path (52) and the heat-absorbing second heat transport flow path (34) are arranged in a flow path layer (74) of the flow path layer stack (78).

2. A cold generator in accordance with claim 1, wherein the at least one heat-emitting refrigerant flow path (32) and the at least one heat-absorbing second heat transport flow path (34) for the second heat transport medium are arranged in the heat-emitting heat exchanger (30) in flow path layers (72, 74) arranged successively in the stack direction (76), and the heat exchange can occur parallel to the stack direction (76).

3. A cold generator in accordance with either of the preceding claims, wherein the at least one heat-absorbing refrigerant flow path (52) and the at least one heat-emitting first heat transport flow path (54) for the first heat transport medium are arranged in the heat-absorbing heat exchanger (50) in flow path layers (74, 72) arranged successively in the stack direction (76), and the heat exchange can occur parallel to the stack direction (76).

4. A cold generator in accordance with any of the preceding claims, wherein the heat-emitting heat exchanger (30) and the heat-absorbing heat exchanger (50) are arranged adjacently in the heat exchanger unit (70) in a direction transverse to the stack direction (76), in that in particular the heat-emitting heat exchanger (30) and the heat-absorbing heat exchanger (50) are arranged at a spacing from one another in a direction transverse to the stack direction (76).

5. A cold generator in accordance with claim 4, wherein an inner heat exchanger (90) is arranged between the heat-emitting heat exchanger (30) and the heat-absorbing heat exchanger (50), in that in particular the inner heat exchanger (90) is formed by overlapping the heat-emitting refrigerant flow path (32) in a flow path layer (72) and the heat-absorbing refrigerant flow path (52) in an adjacent flow path layer (74), and/or in that in particular in the inner heat exchanger (90) the refrigerant can be cooled in the region of a refrigerant outlet side of the heat-emitting refrigerant flow path (32) and the refrigerant can be heated in the region of a refrigerant outlet side of the heat-absorbing refrigerant flow path (52).

6. A cold generator in accordance with claim 5, wherein the heat-emitting refrigerant flow path (32) has a refrigerant inlet side (82) and a refrigerant outlet side (84) and the heat-absorbing refrigerant flow path (52) has a refrigerant inlet side (86) and a refrigerant outlet side (88), and in that the refrigerant outlet side (84) of the heat-emitting refrigerant flow path (32) and the refrigerant outlet side (88) of the heat-absorbing refrigerant flow path (52) are arranged overlapping one another.

7. A cold generator in accordance with any of the preceding claims, wherein, in order to temporarily heat the first heat transport medium in the first heat transport circuit (102) in the heat exchanger unit (70), heat is suppliable to the first heat transport medium, wherein the flow paths (34, 54) for the first heat transport medium and the second heat transport medium remain separate.

8. A cold generator in accordance with any of the preceding claims, wherein the cold generator has a redirection system (182, 252, 312) for heat transport medium, by means of which system heat is suppliable to the first heat transport medium in the heat exchanger unit (70) by redirecting heat transport medium.

9. A cold generator in accordance with any of the preceding claims, wherein the heat exchanger unit (70) comprises a heating heat exchanger (170) for temporarily heating the first heat transport medium, and, in order to form the heating heat exchanger (170), at least one flow path layer (72, 172) of the heat exchanger unit (70) has at least one additional flow path (192, 290) for temporarily heating the first heat transport medium, wherein in particular the at least one additional flow path (192) is provided in a flow path layer (72, 172) which in the stack direction (76) borders one of the heat-emitting first heat transport flow paths (54) for the first heat transport medium, is arranged overlapping therewith, and can be passed through by the second heat transport medium, OR the at least one additional flow path (192') for heating the first heat transport medium can be passed through by the first heat transport medium, borders the at least one heat-absorbing heat transport flow path (34) for the second heat transport medium in the stack direction (76), and is arranged overlapping therewith, AND/OR either the at least one additional flow path (192, 192') is arranged in an additional flow path layer (172) of the heat exchanger unit (70), or the at least one additional flow path (290) is arranged in the same flow path layer (72) as one of the heat transport flow paths (34, 54), wherein the at least one first heat transport flow path (54) through which the first heat transport medium passes extends from an inlet side (126) to an outlet side (128), and in that the respective additional heat transport path (290) branches off from the first heat transport flow path and runs to a heating outlet side (304), AND/OR the at least one additional flow path (290) is formed by a partial surface region (292) of one of the flow path layers (72, 172), wherein the at least one additional flow path (290) is arranged overlapping with an outlet side (156) of the second heat transport flow path (34).

10. A cold generator in accordance with any of the preceding claims, wherein, by means of a redirection system (262) for refrigerant, heated refrigerant is supplied at high pressure to the heat-absorbing refrigerant flow path (52) by the compression instead of expanded refrigerant at low pressure by the expansion member (44).

11. A cold generator in accordance with any of the preceding claims, wherein the heat-absorbing heat transport flow path (34) is configured to guide a liquid heat transport medium, in that in particular the second heat transport medium circulating in the second heat transport circuit (132) is a liquid heat transport medium, and in particular a second heat-emitting heat exchanger (142) is connectable to the second heat transport circuit (132).

12. A cold generator in accordance with any of the preceding claims, wherein the heat-emitting heat transport flow path (54) is configured to guide a liquid heat transport medium, in that in particular the first heat transport medium circulating in the first heat transport circuit (102) is a liquid heat transport medium, and in particular a heat-absorbing heat exchanger (112) is connectable to the first heat transport circuit (102).

13. A cold generator in accordance with any of the preceding claims, wherein the flow path layer stack (78) is formed by structural layers (202) defining the various flow paths (32, 34, 52, 54, 172) in the various flow path layers (72, 74, 192), and by cover layers (204) closing the structural layers (202) in the stack direction (76), and in particular a cover layer (204) is arranged between each two structural layers (202) arranged successively in the stack direction (76).

14. A cold generator in accordance with any of the preceding claims, wherein the cold generator comprises all refrigerant conduits (26, 42, 46, 62) leading to the refrigerant flow paths (32, 52) and the expansion member (44) of the refrigerant circuit (20), and/or in particular the cold generator has conduit portions (135, 153) of the second heat transport circuit (132) connected to the heat-absorbing heat transport flow path layer (34) and leading to coupling elements (166, 168), and/or in particular the cold generator has conduit portions (109, 123) of the first heat transport circuit (102) connected to the heat-emitting heat transport flow path layer (54) and leading to coupling elements (162, 164), and/or in particular the cold generator comprises a circulating pump (106) for the first heat transport circuit (102).

15. A cold generator in accordance with claim 14, wherein the components comprised by the cold generator are combined by means of a module base (240) to form a cold generator module, and in particular at least the refrigerant compressor (22) and the heat exchanger unit (70) are held on the module base (240).

16. A refrigerating plant for cooling a space (114) that is to be cooled, wherein a heat exchanger (112) is arranged in the space (114) that is to be cooled, which heat exchanger is arranged in a first heat transport circuit (102) operating with liquid first heat transport medium, and in that the refrigerating plant (100) has a cold generator (10) in accordance with the preceding claims, wherein optionally the first heat transport medium is a water-based heat transport medium, and/or optionally the first heat transport medium is circulated in the first heat transport circuit (102) by generation of a pressure difference of at most 2 bar, wherein optionally the refrigerating plant has a heat exchanger (142) which is arranged in a second heat transport circuit (132) operating with liquid second heat transport medium, and optionally in particular the second heat transport medium is a water-based heat transport medium, and/or optionally the second heat transport medium is circulated in the second heat transport circuit (132) by generation of a pressure difference of at most 2 bar.

## Revendications

1. Générateur de froid (10), comprenant un circuit frigorifique (20) avec un compresseur frigorifique (22) disposé dans le circuit frigorifique (20), un échangeur de chaleur dissipant la chaleur (30) relié à un raccord haute pression (24) du compresseur frigorifique (22), un organe de détente (44) faisant suite à l'échangeur de chaleur dissipant la chaleur (30), et un échangeur de chaleur absorbant la chaleur (50) faisant suite à l'organe de détente (44), lequel est pour sa part relié côté sortie à un raccord d'aspiration (64) du compresseur frigorifique (22), dans lequel le générateur de froid (10) comprend une unité échangeur de chaleur (70), dans laquelle l'échangeur de chaleur dissipant la chaleur (30) et l'échangeur de chaleur absorbant la chaleur (50) sont intégrés, dans lequel l'unité d'échangeur de chaleur (70) comprend une pile de couches de trajet d'écoulement (78) de structure empilée, qui présente des couches de trajets d'écoulement (72, 74, 172) se succédant dans une direction d'empilement (76), dans lequel pour la formation de l'échangeur de chaleur dissipant la chaleur (30) au moins un trajet d'écoulement de réfrigérant dissipant la chaleur (32) et au moins un deuxième trajet d'écoulement de transport de chaleur (34) absorbant la chaleur sont prévus dans la pile de couches de trajet d'écoulement (78), dans lequel le deuxième trajet d'écoulement de transport de chaleur (34) peut être traversé par un deuxième milieu de transport de chaleur guidé dans un deuxième circuit de transport de chaleur (132), dans lequel pour la formation de l'échangeur de chaleur absorbant la chaleur (50) au moins un trajet d'écoulement de réfrigérant absorbant la chaleur (52) et au moins un premier trajet d'écoulement de transport de chaleur (54) dissipant la chaleur est prévu dans la pile de couches de trajet d'écoulement (78), et dans lequel le premier trajet d'écoulement de transport de chaleur (54) peut être traversé par un premier milieu de transport de chaleur guidé dans un premier circuit de transport de chaleur (102),
**caractérisé en ce que** le trajet d'écoulement de réfrigérant dissipant la chaleur (32) et le premier trajet d'écoulement de transport de chaleur (54) dissipant la chaleur sont disposés dans une couche de trajet d'écoulement (72) de la pile de couches de trajet d'écoulement (78), et/ou le trajet d'écoulement de réfrigérant absorbant la chaleur (52) et le deuxième trajet d'écoulement de transport de chaleur (34) absorbant la chaleur sont disposés dans une couche de trajet d'écoulement (74) de la pile de couches de trajet d'écoulement (78).

2. Générateur de froid selon la revendication 1, dans lequel dans l'échangeur de chaleur dissipant la chaleur (30) le au moins un trajet d'écoulement de réfrigérant dissipant la chaleur (32) et le au moins un deuxième trajet d'écoulement de transport de chaleur (34) absorbant la chaleur pour le deuxième milieu de transport de chaleur sont disposés dans des couches de trajet d'écoulement (72, 74) se succédant dans la direction d'empilement (76) et l'échange de chaleur peut s'effectuer parallèlement à la direction d'empilement (76) .

3. Générateur de froid selon l'une quelconque des revendications précédentes, dans lequel dans l'échangeur de chaleur absorbant la chaleur (50) le au moins un trajet d'écoulement de réfrigérant absorbant la chaleur (52) et le au moins un premier trajet d'écoulement de transport de chaleur (54) dissipant la chaleur pour le premier milieu de transport de chaleur sont disposés dans des couches de trajet d'écoulement (74, 72) se succédant dans la direction d'empilement (76) et l'échange de chaleur peut s'effectuer parallèlement à la direction d'empilement (76).

4. Générateur de froid selon l'une quelconque des revendications précédentes, dans lequel l'échangeur de chaleur dissipant la chaleur (30) et l'échangeur de chaleur absorbant la chaleur (50) sont disposés l'un à côté de l'autre dans l'unité échangeur de chaleur (70) dans la direction transversale par rapport à la direction d'empilement (76), qu'en particulier l'échangeur de chaleur dissipant la chaleur (30) et l'échangeur de chaleur absorbant la chaleur (50) sont disposés à distance l'un de l'autre dans la direction transversale par rapport à la direction d'empilement (76).

5. Générateur de froid selon la revendication 4, dans lequel un échangeur de chaleur intérieur (90) est disposé entre l'échangeur de chaleur dissipant la chaleur (30) et l'échangeur de chaleur absorbant la chaleur (50), qu'en particulier l'échangeur de chaleur intérieur (90) est formé par chevauchement du trajet d'écoulement de réfrigérant dissipant la chaleur (32) dans une couche de trajet d'écoulement (72) et du trajet d'écoulement de réfrigérant absorbant la chaleur (52) dans une couche de trajet d'écoulement (74) voisine, et/ou qu'en particulier dans l'échangeur de chaleur intérieur (90) un refroidissement du réfrigérant dans la zone d'un côté de sortie de réfrigérant du trajet d'écoulement de réfrigérant dissipant la chaleur (32) et un échauffement du réfrigérant dans la zone d'un côté de sortie de réfrigérant du trajet d'écoulement de réfrigérant absorbant la chaleur (52) peut s'effectuer.

6. Générateur de froid selon la revendication 5, dans lequel le trajet d'écoulement de réfrigérant dissipant la chaleur (32) présente un côté d'entrée de réfrigérant (82) et un côté de sortie de réfrigérant (84) et le trajet d'écoulement de réfrigérant absorbant la chaleur (52) un côté d'entrée de réfrigérant (86) et un côté de sortie de réfrigérant (88), et que le côté de sortie de réfrigérant (84) du trajet d'écoulement de réfrigérant dissipant la chaleur (32) et le côté de sortie de réfrigérant (88) du trajet d'écoulement de réfrigérant absorbant la chaleur (52) sont disposés de manière à se chevaucher.

7. Générateur de froid selon l'une quelconque des revendications précédentes, dans lequel pour le chauffage temporaire du premier milieu de transport de chaleur dans le premier circuit de transport de chaleur (102) dans l'unité échangeur de chaleur (70) de la chaleur peut être amenée au premier milieu de transport de chaleur, dans lequel les trajets d'écoulement (34, 54) pour le premier milieu de transport de chaleur et le deuxième milieu de transport de chaleur restent séparés.

8. Générateur de froid selon l'une quelconque des revendications précédentes, dans lequel le générateur de froid présente un système de déviation (182, 252, 312) pour le milieu de transport de chaleur, avec lequel dans l'unité échangeur de chaleur (70) de la chaleur peut être amenée au premier milieu de transport de chaleur par déviation du milieu de transport de chaleur.

9. Générateur de froid selon l'une quelconque des revendications précédentes, dans lequel l'unité échangeur de chaleur (70) comprend un échangeur de chaleur d'échauffement (170) pour l'échauffement temporaire du premier milieu de transport de chaleur, et pour la formation de l'échangeur de chaleur d'échauffement (170) au moins une couche de trajet d'écoulement (72, 172) de l'unité échangeur de chaleur (70) présente au moins un trajet d'écoulement supplémentaire (192, 290) pour l'échauffement temporaire du premier milieu de transport de chaleur, dans lequel en particulier le au moins un trajet d'écoulement supplémentaire (192) est prévu dans une couche de trajet d'écoulement (72, 172) qui est adjacente à l'un des premiers trajets d'écoulement de transport de chaleur (54) dissipant la chaleur dans la direction d'empilement (76) pour le premier milieu de transport de chaleur, est disposé de manière à chevaucher celui-ci et peut être traversé par le deuxième milieu de transport de chaleur, ou le au moins un trajet d'écoulement supplémentaire (192') pour l'échauffement du premier milieu de transport de chaleur peut être traversé par le premier milieu de transport de chaleur, est adjacent dans la direction d'empilement (76) au au moins un trajet d'écoulement de transport de chaleur (34) absorbant la chaleur pour le deuxième milieu de transport de chaleur et est disposé en chevauchement avec celui-ci, et/ou soit le au moins un trajet d'écoulement supplémentaire (192, 192') est disposé dans une couche de trajet d'écoulement supplémentaire (172) de l'unité échangeur de chaleur (70), soit le au moins un trajet d'écoulement supplémentaire (290) est disposé respectivement dans la même couche de trajet d'écoulement (72) qu'un des trajets d'écoulement de transport de chaleur (34, 54), dans lequel le au moins un premier trajet d'écoulement de transport de chaleur (54) traversé par le premier milieu de transport de chaleur s'étend d'un côté d'entrée (126) à un côté de sortie (128) et que le trajet d'écoulement supplémentaire (290) respectif bifurque du premier trajet d'écoulement de transport de chaleur qui s'étend vers un côté de sortie d'échauffement (304), et/ou le au moins un trajet d'écoulement supplémentaire (290) est formé par une zone de surface partielle (292) d'une des couches de trajet d'écoulement (72, 172), dans lequel le au moins un trajet d'écoulement supplémentaire (290) est disposé en chevauchement avec le deuxième trajet d'écoulement de transport de chaleur (34), et/ou le au moins un trajet d'écoulement supplémentaire (290) est disposé en chevauchement avec un côté de sortie (156) du deuxième trajet d'écoulement de transport de chaleur (34) .

10. Générateur de froid selon l'une quelconque des revendications précédentes, dans lequel au moyen d'un système de déviation (262) pour le réfrigérant un réfrigérant réchauffé par la compression est amené sous basse pression au trajet d'écoulement de réfrigérant absorbant la chaleur (52) à la place du réfrigérant détendu par l'organe de détente (44).

11. Générateur de froid selon l'une quelconque des revendications précédentes, dans lequel le trajet d'écoulement de transport de chaleur (34) absorbant la chaleur est conçu pour le guidage d'un milieu de transport de chaleur liquide, qu'en particulier le deuxième milieu de transport de chaleur tournant dans le deuxième circuit de transport de chaleur (132) est un milieu de transport de chaleur liquide et en particulier un deuxième échangeur de chaleur dissipant la chaleur (142) peut être relié au deuxième circuit de transport de chaleur (132).

12. Générateur de froid selon l'une quelconque des revendications précédentes, dans lequel le trajet d'écoulement de transport de chaleur (54) dissipant la chaleur est réalisé pour le guidage d'un milieu de transport de chaleur liquide, qu'en particulier le premier milieu de transport de chaleur tournant dans le premier circuit de transport de chaleur (102) est un milieu de transport de chaleur liquide et en particulier un échangeur de chaleur absorbant la chaleur (112) peut être relié au premier circuit de transport de chaleur (102) .

13. Générateur de froid selon l'une quelconque des revendications précédentes, dans lequel la pile de couches de trajet d'écoulement (78) est formée par des couches structurales (202) fixant le trajet d'écoulement (32, 34, 52, 54, 172) respectif dans la couche de trajet d'écoulement (72, 74, 192) respective ainsi que des couches de recouvrement (204) fermant les couches structurales (202) dans la direction d'empilement (76), et en particulier respectivement une couche de recouvrement (204) est disposée entre respectivement deux couches structurales (202) se succédant dans la direction d'empilement (76).

14. Générateur de froid selon l'une quelconque des revendications précédentes, dans lequel celui-ci comprend toutes les conduites de réfrigérant (26, 42, 46, 62) menant aux trajets d'écoulement de réfrigérant (32, 52) et l'organe de détente (44) du circuit frigorifique (20), et/ou en particulier celui-ci présente des parties de conduite (135, 153) du deuxième circuit de transport de chaleur (132) reliées au trajet d'écoulement de transport de chaleur (54) absorbant la chaleur et menant jusqu'à des éléments d'accouplement (166, 168), et/ou en particulier celui-ci présente des parties de conduite (109, 123) du premier circuit de transport de chaleur (102) reliées au trajet d'écoulement de transport de chaleur (54) dissipant la chaleur et menant jusqu'à des éléments d'accouplement (162, 164), et/ou qu'en particulier celui-ci comprend une pompe de circulation (106) pour le premier circuit de transport de chaleur (102).

15. Générateur de froid selon la revendication 14, dans lequel les composants compris par celui-ci sont réunis en un module de générateur de froid au moyen d'une base de module (240), et en particulier au moins le compresseur frigorifique (22) et l'unité échangeur de chaleur (70) sont maintenus sur la base de module (240).

16. Installation frigorifique pour le refroidissement d'un espace (114) à refroidir, dans laquelle un échangeur de chaleur (112), qui est disposé dans un premier circuit de transport de chaleur (102) fonctionnant avec un premier milieu de transport de chaleur liquide, est disposé dans l'espace (114) à refroidir, et que l'installation frigorifique (100) présente un générateur de froid (10) selon l'une quelconque des revendications précédentes, dans lequel éventuellement le premier milieu de transport de chaleur est un milieu de transport de chaleur à base d'eau et/ou éventuellement le premier milieu de transport de chaleur est amené à circuler dans le premier circuit de transport de chaleur (102) par génération d'une différence de pression de maximum 2 bar, dans lequel éventuellement l'installation frigorifique présente un échangeur de chaleur (142), qui est disposé dans un deuxième circuit de transport de chaleur (132) fonctionnant avec un deuxième milieu de transport de chaleur liquide, et éventuellement en particulier le deuxième milieu de transport de chaleur est un milieu de transport de chaleur à base d'eau, et/ou éventuellement le deuxième milieu de transport de chaleur est amené à circuler dans le deuxième circuit de transport de chaleur (132) par génération d'une différence de pression de maximum 2 bar.
